# EUROPÄISCHE PATENTSCHRIFT

(11) **EP 3 645 910 B1**
(45) Veröffentlichungstag und Bekanntmachung des Hinweises auf die Patenterteilung: **29.11.2023**
(21) Anmeldenummer: 18727758.7
(22) Anmeldetag: 23.05.2018
(51) Int. Cl.: F16F 15/14, F16F 15/16

(54) **GESCHMIERTES TILGERSYSTEM**
LUBRICATED OSCILLATION ABSORBER SYSTEM
SYSTÈME D'ABSORBEUR D'OSCILLATIONS LUBRIFIÉ

(30) Priorität: 30.06.2017 DE 102017211204
(43) Veröffentlichungstag der Anmeldung: 06.05.2020
(73) Patentinhaber: ZF Friedrichshafen AG, 88046 Friedrichshafen (DE)
(72) Erfinder: SIEMENS, Kyrill, 97084 Würzburg (DE); ORLAMÜNDER, Andreas, 97453 Schonungen (DE); WEBER, Paul, 97505 Geldersheim (DE); HAMMER, Peter, 97421 Schweinfurt (DE); PITTNER, Daniel, 04654 Frohburg (DE)
(74) Vertreter: ZF Friedrichshafen AG
(86) Internationale Anmeldenummer: PCT/EP2018/063501
(87) Internationale Veröffentlichungsnummer: WO 2019/001851

(56) Entgegenhaltungen:
- EP-A1- 0 972 965
- EP-A1- 2 916 033
- WO-A1-2015/192841
- DE-A1- 10 005 544
- DE-A1- 19 954 272
- DE-C- 727 378
- FR-A1- 2 783 297
- US-A- 2 127 888

## Beschreibung

Die Erfindung betrifft ein Tilgersystem, aufweisend wenigstens einen Tilgermassenträger und zumindest eine relativ zum Tilgermassenträger bewegbar an diesem aufgenommene Tilgermasse, wobei dem Tilgermassenträger jeweils mit Radialversatz zueinander eine Schmiermittelzuführung, ein Schmiermittelsammler sowie ein Schmiermittelverteiler zugeordnet sind, von denen die Schmiermittelzuführung in geringerem Radialabstand als der Schmiermittelsammler zu einer Zentralachse und der Schmiermittelverteiler in größerem Radialabstand als der Schmiermittelsammler zu einer Zentralachse angeordnet sind, um mit Unterstützung durch die Fliehkraft mittels der Schmierzuführung zugeführtes Schmiermittel über den Schmiermittelsammler anzusammeln und durch den Schmiermittelverteiler wenigstens zu der zumindest einen Tilgermasse zu leiten.

Ein derartiges Tilgersystem ist aus der WO 2015/192841 A1 bekannt. Der Tilgermassenträger ist mit zwei in Axialabstand zueinander angeordneten Tilgermassenträgerelementen versehen und durch Befestigung an einer Nabe um eine Zentralachse drehbar angeordnet. Die beiden Tilgermassenträgerelemente bilden axial zwischen sich einen Schmiermittelsammler, der aus einer Schmiermittelzuführung mit Schmiermittel in Form einer Flüssigkeit versorgt wird, sowie einen Schmiermittelverteiler, der das Schmiermittel nach radial außen leitet, und der radial innerhalb der Tilgermassen in einem Aufnahmeraum für die Tilgermassen axial zwischen den beiden Tilgermassenträgerelementen mündet. Das Schmiermittel ist nach Verlassen dieser Mündung führungslos, und drängt daher unter der Wirkung der Fliehkraft nach radial außen. Dort mag das Schmiermittel zwar die Tilgermassen umströmen, wird aber nicht zwingend zu schmierbedarfsintensiven Baueinheiten geführt, wie beispielsweise zur Koppeleinrichtung, durch welche die Verbindung zwischen Tilgermassenträger und der Tilgermassen erfolgt. Weitere Tilgersysteme sind auch in der US 2 127 888 A, der DE 727 378 C, der EP 0 972 965 A1 und EP 2 916 033 A1 beschrieben.

Der Erfindung liegt die Aufgabe zugrunde, ein Tilgersystem derart auszubilden, dass zugeführtes Schmiermittel gezielt zu schmierbedarfsintensiven Baueinheiten geführt wird.

Diese Aufgabe wird gemäß Anspruch 1 durch ein Tilgersystem gelöst, das wenigstens einen Tilgermassenträger und zumindest eine relativ zum Tilgermassenträger bewegbar an diesem aufgenommene Tilgermasse aufweist, wobei dem Tilgermassenträger jeweils mit Radialversatz zueinander eine Schmiermittelzuführung, ein Schmiermittelsammler sowie ein Schmiermittelverteiler zugeordnet sind, von denen die Schmiermittelzuführung in geringerem Radialabstand als der Schmiermittelsammler zu einer Zentralachse und der Schmiermittelverteiler in größerem Radialabstand als der Schmiermittelsammler zu einer Zentralachse angeordnet sind, um mit Unterstützung durch die Fliehkraft mittels der Schmierzuführung zugeführtes Schmiermittel über den Schmiermittelsammler anzusammeln und durch den Schmiermittelverteiler wenigstens zu der zumindest einen Tilgermasse zu leiten.

Von besonderer Bedeutung ist, dass zumindest für den Schmiermittelsammler eine Zuordnung zu einer Anschlaganordnung besteht, die zur Begrenzung des Auslenkweges der Tilgermasse gegenüber dem Tilgermassenträger dient, und dass der Schmiermittelverteiler über zumindest eine vom Schmiermittelsammler zu wenigstens einer ausgewählten schmierbedarfsintensiven Baueinheit führende Schmiermittelzuleitung verfügt, welche angrenzend an den Erstreckungsbereich dieser ausgewählten schmierbedarfsintensiven Baueinheit mündet, wobei die Anschlaganordnung den Schmiermittelsammler beinhaltet.

Da eine zur Begrenzung des Auslenkweges der Tilgermasse gegenüber dem Tilgermassenträger vorgesehene Anschlaganordnung zur Wahrnehmung der ihr bestimmten Funktion in unmittelbarer Nähe zur Tilgermasse angeordnet sein muss, wird durch die Zuordnung des Schmiermittelsammlers zu einer derartigen Anschlaganordnung erreicht, dass der Schmiermittelsammler ebenfalls in unmittelbarer Nähe zur Tilgermasse angeordnet sein kann. Zur Überbrückung eines allenfalls noch geringen Abstandes zwischen dem Schmiermittelsammler und wenigstens einer der zumindest einen Tilgermasse zugeordneten, ausgewählten schmierbedarfsintensiven Bauein heit, wie beispielsweise einer die Tilgermasse mit dem Tilgermassenträger bewegbar verbindenden Koppeleinrichtung, ist der Schmiermittelverteiler vorgesehen, der das am Schmiermittelsammler angesammelte Schmiermittel bis unmittelbar an die wenigstens eine schmierbedarfsintensive Baueinheit fördert. Auf diese Weise wird dafür gesorgt, dass eine schmierbedarfsintensive Baueinheit mit einer hinreichenden Menge an Schmiermittel gezielt versorgt werden kann, während gleichzeitig vermieden wird, dass zumindest Restbestände des Schmiermittels zu Bereichen des Tilgersystems gelangen können, die keiner Schmierung bedürfen.

Hinzu kommt, dass durch die Ansammlung von Schmiermittel im Schmiermittelsammler bereits die Zuführung geringster Mengen eines Schmiermittels, beispielsweise in Form eines Schmiermittelnebels, zum Schmiermittelsammler genügt, der zunächst als Zwischenspeicher für das Schmiermittel wirksam ist, bevor eine für einen Schmiervorgang hinreichende Menge an Schmiermittel über den Schmiermittelverteiler an die zumindest eine schmierbedarfsintensive Baueinheit weitergegeben wird. Für diese Weitergabe wird keine zusätzliche Förderfunktion benötigt, wenn sowohl der Schmiermittelsammler als auch der Schmiermittelverteiler jeweils radial innerhalb der jeweiligen schmierbedarfsintensiven Baueinheit angeordnet sind, da dann die im Betrieb wirksame Fliehkraft für die Förderung des Schmiermittels genügt.

Von besonderem Vorteil ist hierbei, wenn der Schmiermittelverteiler zumindest eine Schmiermittelzuleitung aufweist mit einem Schmiermitteleingang zumindest im Wesentlichen radial außerhalb des Schmiermittelsammlers und einem Schmiermittelausgang zumindest im Wesentlichen radial außerhalb des Schmiermitteleinganges. Das Schmiermittel kann bei einer derartigen Relativanordnung mit ausschließlicher Unterstützung durch die Fliehkraft aus dem Schmiermittelsammler in den Schmiermitteleingang der Schmiermittelzuleitung eintreten, um von dort aus, ebenfalls mit ausschließlicher Unterstützung durch die Fliehkraft, zu dem Schmiermittelausgang der Schmiermittelzuleitung und damit zu der jeweiligen schmierbedarfsintensiven Baueinheit zu gelangen.

Da der Schmiermittelsammler, wie bereits zum Ausdruck gebracht worden ist, einer Anschlaganordnung zugeordnet sein soll, findet mit besonderem Vorzug eine Anschlaganordnung Verwendung, die radial innerhalb der zumindest einen Tilgermasse vorgesehen ist. Eine vorteilhafte Ausführung für den Schmiermittelsammler liegt vor, wenn dieser eine Zentralachse zumindest im Wesentlichen ringförmig umschließt, und an seiner von der zumindest einen Tilgermasse abgewandten Radialseite mit wenigstens einer Öffnung versehen ist, über welche mit Unterstützung durch die jeweils anliegende Fliehkraft von der Schmiermittelzuführung stammendes Schmiermittel in zumindest einen innerhalb des Schmiermittelsammlers vorgesehenen Schmiermittelsammelraum eindringen kann, um sich dort anzusammeln. Weiterhin soll zumindest ein Teil dieses Schmiermittels über einen dem Schmiermittelsammelraum zugeordneten Schmiermitteldurchgang aus dem Schmiermittelsammelraum in den Schmiermittelverteiler abströmen können, so dass dieser Schmiermitteldurchgang im Schmiermittelsammler als Schmiermitteleingang der Schmiermittelzuleitung und damit des Schmiermittelverteilers wirksam ist.

Eine vorteilhafte Ausführung zur Bildung des Schmiermittelsammelraumes besteht darin, dass der Schmiermittelsammler an seiner der zumindest einen Tilgermasse zugewandten Radialseite über eine Deckwandung verfügt, welcher an zumindest einer Axialseite eine zumindest im Wesentlichen nach radial innen verlaufende Radialwandung zugeordnet ist. Weiterhin besteht eine vorteilhafte Ausführung darin, den zumindest einen Schmiermitteldurchgang in der Deckwandung und/oder in der wenigstens einen nach radial innen verlaufenden Radialwandung zu realisieren. Hierbei weist die wenigstens eine Deckwandung und/oder die wenigstens eine Radialwandung des Schmiermittelsammlers in Umfangsrichtung zumindest eine als Schmiermitteldurchgang dienende Umfangsunterbrechung auf. Auch bei dieser Ausführung ist der jeweilige Schmiermitteldurchgang als Schmiermitteleingang der Schmiermittelzuleitung und damit des Schmiermittelverteilers wirksam.

Eine weitere vorteilhafte Ausführungsform ist insbesondere für Tilgermassenträger interessant, die jeweils axial beidseits der zumindest einen Tilgermasse über jeweils ein Tilgermassenträgerelement verfügen. Wenn der Schmiermittelsammler an seiner der zumindest einen Tilgermasse zugewandten Radialseite über eine Deckwandung verfügt, welche an ihrer radialen Innenseite in Umfangsrichtung zumindest einen Bereich aufweist, welcher im Wesentlichen in axialer Mitte mit der größten Erstreckung nach radial innen versehen ist, um von dort aus in axialer Richtung zu dem jeweiligen Tilgermassenträgerelement eine Reduzierung der Erstreckung nach radial innen zu erfahren, welcher also gepfeilt ist, hat dies zur Folge, dass auf die radiale Innenseite der Deckwandung aufgetroffenes Schmiermittel ausgehend von der im Wesentlichen in axialer Mitte vorhandenen Pfeilspitze in Achsrichtung beidseits abströmt, um sich schließlich an den Pfeilrändern an dem der jeweiligen Strömungsrichtung zugeordneten Tilgermassenträgerelement anzusammeln. Mit Vorzug weist die gepfeilte Deckwandung des Schmiermittelsammlers in Umfangsrichtung zumindest einen als Schmiermitteleingang der Schmiermittelzuführung wirksamen Schmiermitteldurchgang auf, der durch Axialreduzierung der Deckwandung gebildet ist.

Eine vergleichbare Ausführung liegt vor, wenn die Deckwandung an ihrer radialen Innenseite nicht gepfeilt ist, dafür aber eine konvexe Ausbildung aufweist. Hierbei weist der Bereich im Wesentlichen in axialer Mitte die größte Erstreckung nach radial innen auf, um von dort aus in Achsrichtung zu dem jeweiligen Tilgermassenträgerelement eine Reduzierung der Erstreckung nach radial innen zu erfahren. Zwar kann auch bei dieser Ausführung die konvexe Deckwandung des Schmiermittelsammlers in Umfangsrichtung zumindest einen als Schmiermitteleingang der Schmiermittelzuführung wirksamen Schmiermitteldurchgang aufweisen, der durch Axialreduzierung der Deckwandung gebildet ist. Ebenso ist es aber auch möglich, das jeweilige Tilgermassenträgerelement an seiner der zumindest einen Tilgermasse jeweils zugewandten Seite mit wenigstens einer als Schmiermitteldurchgang und damit als Schmiermitteleingang der Schmiermittelzuführung dienenden Axialreduzierung auszubilden. Ergänzend kann zumindest eines der Tilgermassenträgerelemente im radial inneren Bereich über eine von der zumindest einen Tilgermasse fortweisende Materialumformung verfügen, um auf diese Weise die Benetzungsoberfläche des Schmiermittelsammlers zu vergrößern, und damit die Ansammlung an Schmiermittel weiter zu vergrößern. Die Materialumformung kann beispielsweise als Tiefziehkontur gestaltet werden.

Alternativ können Tilgermassenträger interessant sein, bei denen axial jeweils beidseits zumindest jeweils eine Tilgermasse aufgenommen ist. Bei einer derartigen Ausführung kann der Schmiermittelsammler über zumindest eine Schmiermittelsammlerkomponente verfügen, die an ihrer der jeweils zumindest einen Tilgermasse zugewandten Radialseite eine Deckwandung aufweist, die an ihrer radialen Innenseite in Umfangsrichtung zumindest einen Bereich aufweist, welcher an seiner vom Tilgermassenträger am weitesten beabstandeten Axialseite die größte Erstreckung nach radial innen aufweist, um von dort aus in axialer Richtung zu dem Tilgermassenträger eine Reduzierung der Erstreckung nach radial innen zu erfahren. Trifft auf die derart gestaltete radiale Innenseite der Deckwandung Schmiermittel auf, wird dieses Schmiermittel ausgehend von der Axialseite mit der größten Erstreckung nach radial innen im Wesentlichen in Richtung zum Tilgermassenträger gefördert, mithin also zu einem Bereich geringerer Erstreckung nach radial innen, wo sich das Schmiermittel ansammeln wird. Um das Schmiermittel zur jeweiligen ausgewählten schmierbedarfsintensiven Baueinheit weiterleiten zu können, ist wiederum ein Schmiermitteldurchgang erforderlich, der an der Schmiermittelsammlerkomponente und/oder an dem Tilgermassenträger an der dem jeweils anderen dieser beiden Baueinheiten - also Schmiermittelsammlerkomponente oder Tilgermassenträger - zugewandten Seite vorgesehen ist. Dieser Schmiermitteldurchgang ist als Schmiermitteleingang der Schmiermittelzuführung wirksam, und wird durch eine Axialreduzierung an der Schmiermittelsammlerkomponente und/oder an dem Tilgermassenträger erzeugt. Da an beiden Seiten des Tilgermassenträgers jeweils zumindest eine Tilgermasse vorgesehen ist, muss die Ausführung sich nicht auf eine einzelne Schmiermittelsammlerkomponente an einer Axialseite des Tilgermassenträgers beschränken, sondern es können ebenso auch Schmiermittelsammlerkomponenten an beiden Axialseiten des Tilgermassenträgers vorgesehen sein.

Eine alternative Ausführungsform liegt vor, wenn ein Tilgersystem wenigstens eine Tilgermasse aufweist, der eine Schmiermittelzuführung, ein Schmiermittelsammler sowie ein Schmiermittelverteiler zugeordnet sind, von denen die Schmiermittelzuführung in geringerem Radialabstand als der Schmiermittelsammler oder der Schmiermittelverteiler zu einer Zentralachse vorgesehen ist, um mit Unterstützung durch die Fliehkraft mittels der Schmiermittelzuführung zugeführtes Schmiermittel über den Schmiermittelsammler anzusammeln und durch den Schmiermittelverteiler wenigstens zu der zumindest einen Tilgermasse zu leiten.

Von besonderer Bedeutung ist hierbei, dass der Schmiermittelsammler und der Schmiermittelverteiler zu einer Schmiermittelbaueinheit zusammengefasst sind, bei welcher zumindest eine zu wenigstens einer ausgewählten schmierbedarfsintensiven Baueinheit führende Schmiermittelzuleitung angrenzend an den Erstreckungsbereich der wenigstens einen ausgewählten schmierbedarfsintensiven Baueinheit mündet.

Mit besonderem Vorzug kann die vorgenannte Schmiermittelbaueinheit aus Schmiermittelsammler und Schmiermittelverteiler an der zumindest einen Tilgermasse realisiert sein, indem die zumindest eine Tilgermasse radial innerhalb einer ausgewählten schmierbedarfsintensiven Baueinheit über wenigstens einen Schmiermittelsammelraum verfügt, dessen radial innerer Bereich als Schmiermitteleingang der Schmiermittelzuleitung wirksam ist, welcher den radial äußeren Bereich, der als Schmiermittelausgang der Schmiermittelzuleitung wirksam ist, bezüglich seiner Breite in Umfangsrichtung um ein Mehrfaches übertrifft, wobei der Schmiermittelausgang der Schmiermittelzuleitung auf eine Mündung verengt ist, die auf die wenigstens eine ausgewählte schmierbedarfsintensive Baueinheit ausgerichtet ist. Aufgrund dieser Verengung des Schmiermittelsammelraums sowie des Schmiermittelverteilers auf die zur ausgewählten schmierbedarfsintensiven Baueinheit gerichteten Mündung wird das im Schmiermittelsammelraum angesammelte Schmiermittel nach Konzentration innerhalb des Schmiermittelsammelraumes an die wenigstens eine ausgewählte schmierbedarfsintensive Baueinheit, wie beispielsweise an eine Koppeleinrichtung zwischen der Tilgermasse und einem Tilgermassenträger, weitergeleitet, und dort über die Mündung abgegeben. Mit Vorzug ist der Schmiermittelsammelraum hierbei durch Axialreduzierung der Tilgermasse zumindest in dem als Schmiermitteleingang der Schmiermittelzuleitung wirksamen radial inneren Bereich der Schmiermittelbaueinheit gebildet.

Nachfolgend ist das Tilgersystem durch Ausführungsbeispiele näher erläutert. Es zeigt:
Fig. 1 eine Draufsicht auf ein Tilgersystem mit einem Tilgermassenträger, der über zwei mit Achsabstand zueinander angeordnete Tilgermassenträgerelemente verfügt, und axial zwischen den Tilgermassenträgerelementen über Tilgermassen, sowie, radial innerhalb der Tilgermassen, über eine Anschlaganordnung, die einen Schmiermittelsammler sowie Komponenten eines Schmiermittelverteilers umfasst;
Fig. 2 eine Schnittdarstellung des Tilgersystems gemäß einer Schnittlinie II - II der Fig. 1;
Fig. 3 eine Herauszeichnung der in Fig. 1 gezeigten Anschlaganordnung;
Fig. 4 eine Schnittdarstellung der Anschlaganordnung gemäß einer Schnittlinie IV - IV der Fig. 3;
Fig. 5 wie Fig. 1 mit einem Schmiermittelsammler sowie mit Komponenten eines Schmiermittelverteilers, aber ohne die Verwendung einer Anschlaganordnung;
Fig. 6 eine Schnittdarstellung des Tilgersystems gemäß einer Schnittlinie VI - VI der Fig. 5;
Fig. 7 eine Herauszeichnung des in Fig. 5 gezeigten Schmiermittelsammlers sowie der in Fig. 5 gezeigten Komponenten des Schmiermittelverteilers;
Fig. 8 eine Schnittdarstellung des in Fig. 5 gezeigten Schmiermittelsammlers sowie der in Fig. 5 gezeigten Komponenten des Schmiermittelverteilers gemäß einer Schnittlinie VIII - VIII der Fig. 7;
Fig. 9 wie Fig. 1, aber mit gepfeilter Ausbildung der Anschlaganordnung an ihrer radialen Innenseite;
Fig. 10 eine Schnittdarstellung des Tilgersystems gemäß einer Schnittlinie X - X der Fig. 9;
Fig. 11 eine Herauszeichnung der in Fig. 9 gezeigten Anschlaganordnung;
Fig. 12 eine Schnittdarstellung der in Fig. 11 gezeigten Anschlaganordnung gemäß einer Schnittlinie XII - XII der Fig. 11;
Fig. 13 wie Fig. 9, aber mit konvexer Ausbildung der Anschlaganordnung an ihrer radialen Innenseite;
Fig. 14 eine Schnittdarstellung des Tilgersystems gemäß einer Schnittlinie XIV - XIV der Fig. 13;
Fig. 15 eine Herauszeichnung der in Fig. 13 gezeigten Anschlaganordnung;
Fig. 16 eine Schnittdarstellung der in Fig. 15 gezeigten Anschlaganordnung gemäß einer Schnittlinie XVI - XVI der Fig. 15;
Fig. 17 wie Fig. 13, aber mit einer von der Tilgermasse fortweisenden Materialumformung an einem der Tilgermassenträgerelemente;
Fig. 18 eine Schnittdarstellung des Tilgersystems gemäß einer Schnittlinie XVIII - XVIII der Fig. 17;
Fig. 19 wie Fig. 1, aber mit einem Tilgermassenträger, der über mit Achsabstand zueinander angeordnete Tilgermassen und eine Anschlaganordnung mit zumindest einer Schmiermittelsammlerkomponente sowie mit zumindest einer Komponente des Schmiermittelverteilers verfügt;
Fig. 20 eine Schnittdarstellung des Tilgersystems gemäß einer Schnittlinie XX - XX der Fig. 19;
Fig. 21 eine Herauszeichnung der in Fig. 19 gezeigten Anschlaganordnung mit zumindest einer Schmiermittelsammlerkomponente sowie mit zumindest einer Komponente des Schmiermittelverteilers;
Fig. 22 eine Schnittdarstellung der in Fig. 21 gezeigten Anschlaganordnung gemäß einer Schnittlinie XXII - XXII der Fig. 21;
Fig. 23 wie Fig. 1, aber mit einer Tilgermasse, die im radial inneren Bereich über eine Kombination aus einem Schmiermittelsammler und dem Schmiermittelverteiler verfügt;
Fig. 24 eine Schnittdarstellung der in Fig. 23 gezeigten Tilgermasse gemäß einer Schnittlinie XXIV - XXIV der Fig. 23.

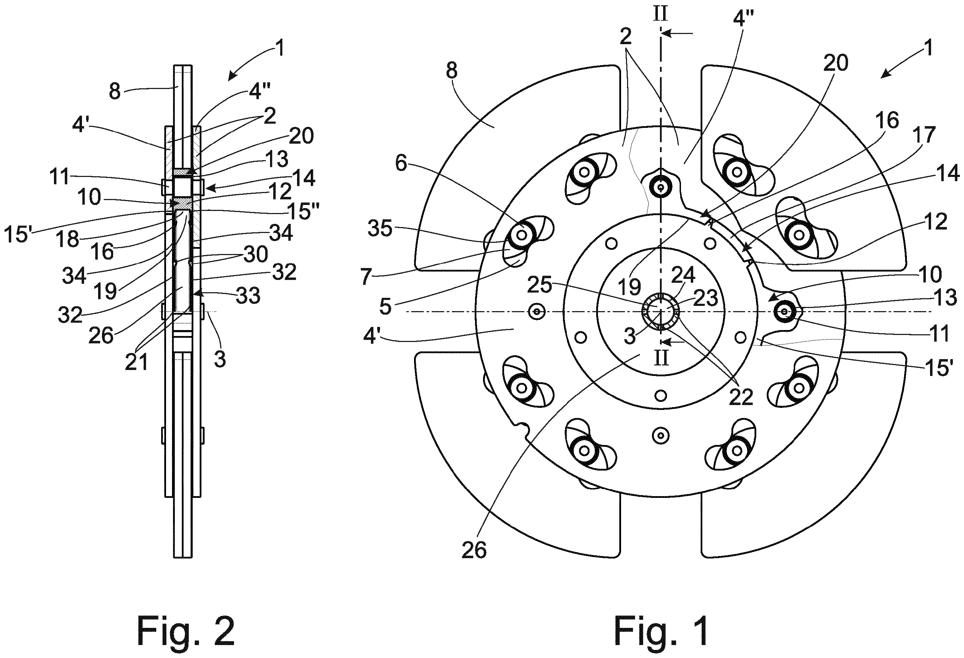

Fig. 1 und 2 zeigen ein Tilgersystem 1 mit einem Tilgermassenträger 2, der um eine Zentralachse 3 drehbar ist, und zwei mit Axialabstand zueinander angeordnete Tilgermassenträgerelemente 4' und 4" aufweist. Jedes Tilgermassenträgerelement 4' oder 4" ist jeweils mit Führungsbahnen 5 versehen, die jeweils gekrümmt und derart angeordnet sind, dass sich die jeweils am weitesten von der Zentralachse 3 entfernte Kurvenposition an der radialen Außenseite der jeweiligen Führungsbahn 5 in Umfangsrichtung im Wesentlichen im mittleren Bereich dieser Führungsbahn 5 befindet. Die Führungsbahnen 5 dienen zur Aufnahme jeweils einer zapfenförmigen Koppeleinrichtung 6, die in ebenfalls gekrümmten Führungsbahnen 7 von Tilgermassen 8 eingreifen, die sich axial zwischen den beiden Tilgermassenträgerelementen 4' und 4" befinden. Die Krümmung der Führungsbahnen 7 der Tilgermassen 8 verläuft derart, dass sich die jeweils am nächsten zu der Zentralachse 3 vorgesehene Kurvenposition an der radialen Innenseite der jeweiligen Führungsbahn in Umfangsrichtung im Wesentlichen im mittleren Bereich dieser Führungsbahn 7 befindet. Die jeweilige Koppeleinrichtung 6 kann in den Führungsbahnen 5 der Tilgermassenträgerelemente 4' und 4" sowie in den Führungsbahnen 7 der Tilgermassen 8 abwälzen. Unter Fliehkrafteinfluss bei Rotation des Tilgermassenträgers 2 um die Zentralachse 3 werden die Tilgermassen 8 nach radial außen gedrängt, und hierbei die Koppeleinrichtungen 6 in eine Position gebracht, in welcher sie sich an der radialen Außenseite der Führungsbahnen 5 der Tilgermassenträgerelemente 4' und 4", vorzugsweise hierbei in der am weitesten von der Zentralachse 3 entfernten Kurvenposition, abstützen, und ihrerseits als Abstützung für die Tilgermassen 8 dienen, die sich mit der radialen Innenseite der Führungsbahnen 7, vorzugsweise hierbei mit der am nächsten an der Zentralachse 3 vorgesehenen Kurvenposition abstützen. Torsionsschwingungen, die durch einen Antrieb, wie beispielsweise durch eine nicht gezeigte Kurbelwelle einer Brennkraftmaschine, eingeleitet werden, versuchen die Tilgermassen aus der zuvor beschriebenen stabilen Betriebslage in Umfangsrichtung zu verdrängen, jedoch wird fliehkraftbedingt stets eine Rückbewegung in diese stabile Betriebslage erzwungen.

Radial innerhalb der Tilgermassen ist eine Anschlaganordnung 10 für die Tilgermassen 8 vorgesehen, wobei diese Anschlaganordnung 10 die Zentralachse 3 im Wesentlichen ringförmig umschließt, und an den beiden Tilgermassenträgerelementen 4' oder 4" mittels Abstandshaltern 11, welche Ösen 13 der Anschlagordnung 10 durchgreifen, befestigt ist. Diese Abstandshalter 11 bewirken, dass die beiden Tilgermassenträgerelemente 4' oder 4" in vorbestimmtem Axialabstand zueinander gehalten sind. Die Anschlaganordnung 10 weist an ihrer den Tilgermassen 8 zugewandten radialen Außenseite eine Deckwandung 12 auf, welche für die Tilgermassen 8 dann, wenn diese nach radial innen fallen, beispielsweise bei Unterschreitung einer minimalen Drehgeschwindigkeit des Tilgermassenträgers 2 um die Zentralachse 3, den Fallweg begrenzend wirksam ist, und somit ein Aufprallgeräusch zumindest reduziert.

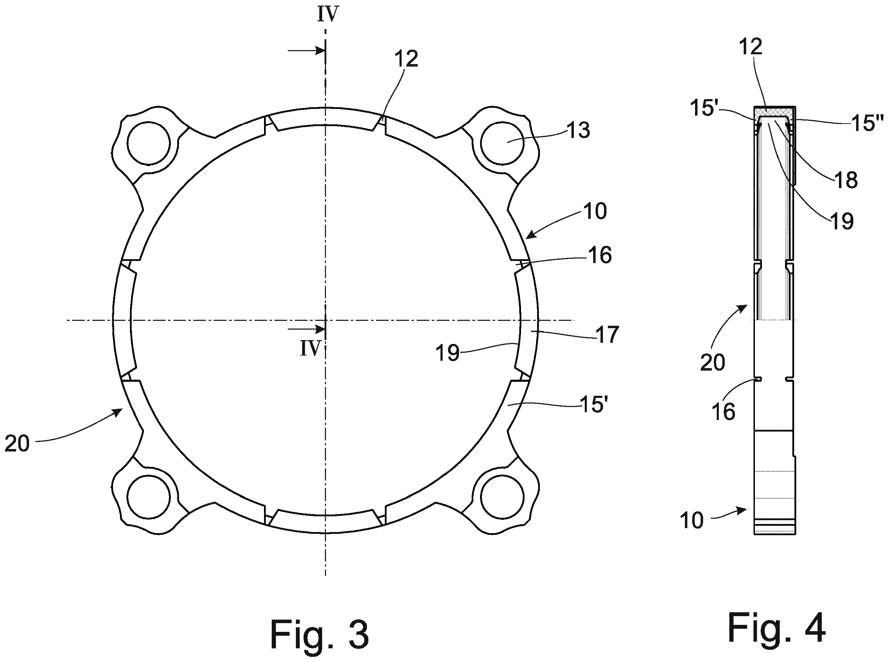

Wie insbesondere Fig. 4 zeigt, sind an der Deckwandung 12 axial beidseits Radialwandungen 15' und 15" vorgesehen, die sich nach radial innen erstrecken, und in Umfangsrichtung von Schmiermitteldurchgängen 16 unterbrochen sind, so dass letztendlich Radialwandungssegmente 17 verbleiben, die gegenüber der Deckwandung 12 umgebogen sind. Die Deckwandung 12 bildet die radiale Außenseite eines zumindest im Wesentlichen ringförmigen Schmiermittelsammelraumes 18, der axial beidseits durch die Radialwandungen 15' und 15" begrenzt ist. Nach radial innen, also in von den Tilgermassen 8 fortweisender Richtung, weist der Schmiermittelsammelraum 18 eine Öffnung 19 auf.

Der Schmiermittelsammelraum 18 ist Teil eines der Anschlaganordnung 10 zugeordneten Schmiermittelsammlers 20, der mit einer Schmiermittelzuführung 23 zusammen wirkt, und gemeinsam mit dieser ein Schmierungssystem 14 bildet. Die Schmiermittelzuführung 23 soll radial innerhalb des Schmiermittelsammlers 20 angeordnet und beispielsweise an einer nicht gezeigten abtriebsseitigen Getriebeeingangswelle vorgesehen sein. In der Zeichnung (vgl. Fig. 1) ist die Schmiermittelzuführung 23 als ein die Zentralachse 3 umgreifendes ringförmiges Bauteil 24 dargestellt, das mit einer Mehrzahl von Radialaussparungen 22 versehen ist. Durch diese Radialaussparungen 22 soll ein Schmiermittelnebel, der über eine Zentralbohrung 25 der Schmiermittelzuführung 23 angeliefert worden ist, in einen Raum 26 radial zwischen der Schmiermittelzuführung 23 und dem Schmiermittelsammler 20 austreten.

Dieser Schmiermittelnebel wird sich, sofern rotationsbedingt eine Fliehkraft anliegt, nach radial außen bewegen, um sich in dem Schmiermittelsammelraum 18 des Schmiermittelsammlers 20 an der Innenseite von dessen Deckwandung 12 abzulagern, und dadurch anzusammeln.

Im Schmiermittelsammelraum 18 des Schmiermittelsammlers 20 angesammeltes Schmiermittel kann über die Schmiermitteldurchgänge 16 der Radialwandungssegmente 17 austreten, und unter der Wirkung einer Fliehkraft über Schmiermitteldurchgänge 21 axial zwischen dem jeweiligen Tilgermassenträgerelement 4', 4" und der jeweils benachbarten Tilgermasse 8 bis unmittelbar radial innerhalb ausgewählter schmierintensiver Baueinheiten 35, wie beispielsweise der Koppeleinrichtungen 6, nach radial außen weitergefördert werden. Auf diese Weise wird der Schmiermittelnebel den ausgewählten schmierintensiven Baueinheiten 35 an jeweils exakt den benötigten Stellen zugeführt. Die Schmiermitteldurchgänge 16 bilden Schmiermitteleingänge 30 einer Schmiermittelzuleitung 33 eines Schmiermittelverteilers 32, während die Schmiermitteldurchgänge 21 als Schmiermittelausgänge 34 der Schmiermittelzuleitung 33 des Schmiermittelverteilers 32 dienen.

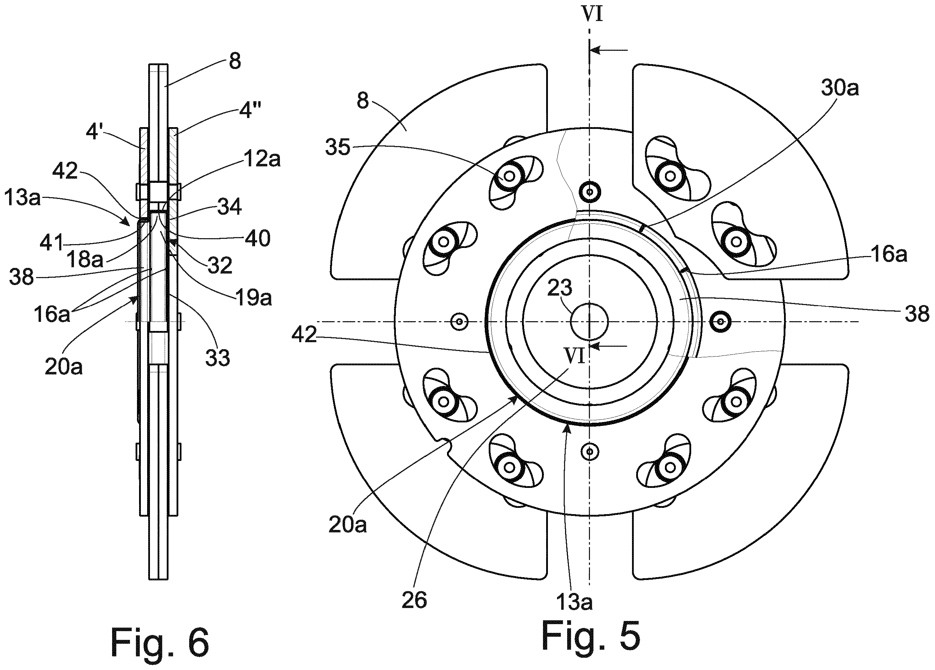

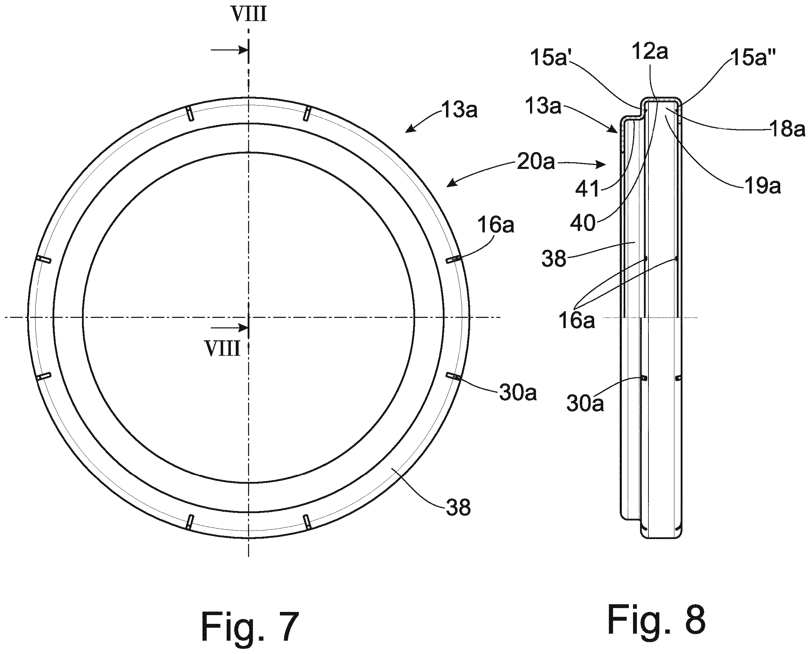

Während bei der Ausführung der Fig. 1 bis 4 das Schmierungssystem 13 die Anschlaganordnung 10 zur Bildung eines Schmiermittelsammlers 20 nutzt, ist das Schmierungssystem 13a bei der Ausführung der Fig. 5 bis 8 funktional unabhängig von einer Anschlaganordnung, indem das Schmierungssystem 13a selbst sowohl für die Versorgung ausgewählter schmierintensiver Baueinheiten 35 mit Schmiermittel als auch für die Bewegungsbegrenzung der Tilgermassen 8 zuständig ist. Zur Erfüllung dieser beiden Funktionen verfügt das Schmierungssystem 13a über eine in Fig. 7 und 8 herausgezeichnete Schmiermittelwanne 38, die mit einem ersten Axialbereich 40 größeren Durchmessers axial zwischen die beiden Tilgermassenträgerelemente 4' und 4" (Fig. 6) und damit in den axialen Erstreckungsbereich der Tilgermassen 8 greift, und mit einem zweiten Axialbereich 41 kleineren Durchmessers axial in eine Aussparung 42 in dem Tilgermassenträgerelement 4'. Während der zweite Axialbereich 41 für eine zentrierte Aufnahme der Schmiermittelwanne 38 im Tilgermassenträger 2 sorgt, kann der erste Axialbereich 40 der Schmiermittelwanne 38 mit seinem größeren Durchmesser bei Bedarf als Anschlaganordnung für die Tilgermassen 8 dienen. Die Schmiermittelwanne 38 umschließt mit einer Deckwandung 12a einen Schmiermittelsammelraum 18a, der an seiner von den Tilgermassen 8 abgewandten Innenseite eine Öffnung 19a zur Aufnahme von Schmiermittel aufweist, das mittels einer in Fig. 5 lediglich schematisch angedeuteten Schmiermittelzuführung 23 angeliefert worden ist. Die Schmiermittelwanne 38 ist Teil eines Schmiermittelsammlers 20a, der in bereits zu Fig. 1 bis 4 beschriebener Weise mit der Schmiermittelzuführung 23 zusammen wirkt.

Der durch die Schmiermittelzuführung 23 angelieferte Schmiermittelnebel wird sich, nach Passage des Raumes 26 radial zwischen der Schmiermittelzuführung 23 und dem Schmiermittelsammler 20a dann, wenn rotationsbedingt eine Fliehkraft anliegt, nach Durchgang durch die Öffnung 19a in dem Schmiermittelsammelraum 18a der Schmiermittelwanne 38 des Schmiermittelsammlers 20a an der Innenseite der Deckwandung 12a ablagern, und dadurch anzusammeln. Dieses Schmiermittel kann über Schmiermitteldurchgänge 16a der Schmiermittelwanne 38 austreten, wobei sich diese Schmiermitteldurchgänge 16a sowohl in der Deckwandung 12a als auch in Radialwandungen 15a' und 15a" im ersten Axialbereich 40 der Schmiermittelwanne 38 und damit in deren Bereich größeren Durchmessers erstrecken. Das über die Schmiermitteldurchgänge 16a der Schmiermittelwanne 38 austretende Schmiermittel wird unter der Wirkung einer Fliehkraft, wie bereits anhand der Fig. 1 und 2 beschrieben, mittels einer Schmiermittelzuleitung 33 eines Schmiermittelverteilers 32 nach radial außen zu ausgewählten schmierintensiven Baueinheiten 35 gefördert, so dass der Schmiermittelnebel folglich diesen Baueinheiten 35 an jeweils exakt den benötigten Stellen zugeführt werden kann. Die Schmiermitteldurchgänge 16a bilden die Schmiermitteleingänge 30a der Schmiermittelzuleitung 33 eines Schmiermittelverteilers 32, während die Schmiermitteldurchgänge 21a axial zwischen den Tilgermassenträgerelementen 4' und 4" und der jeweils zugeordneten Tilgermasse 8 als Schmiermittelausgänge 34 der Schmiermittelzuleitung 33 des Schmiermittelverteilers 32 dienen.

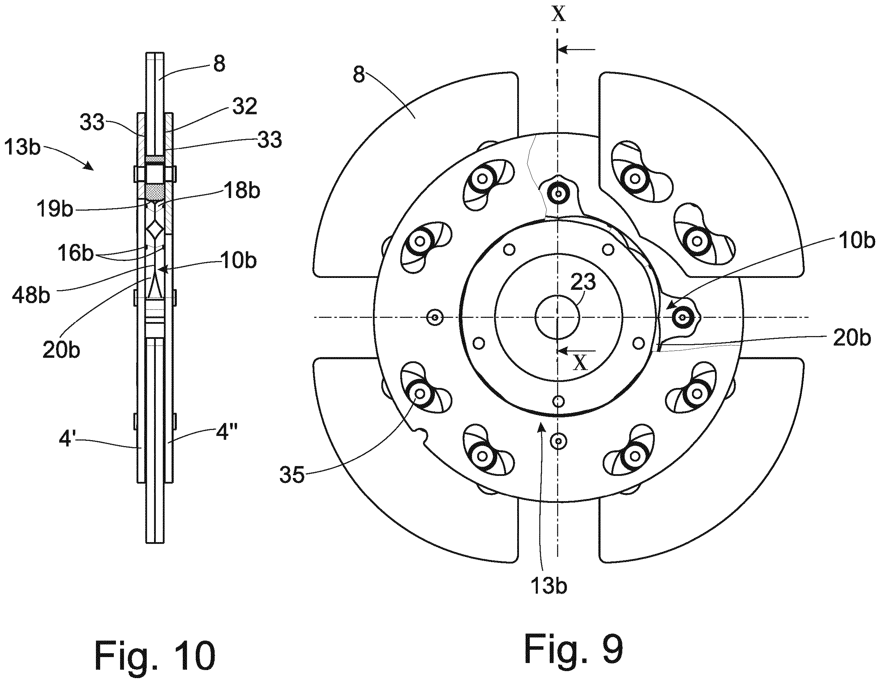

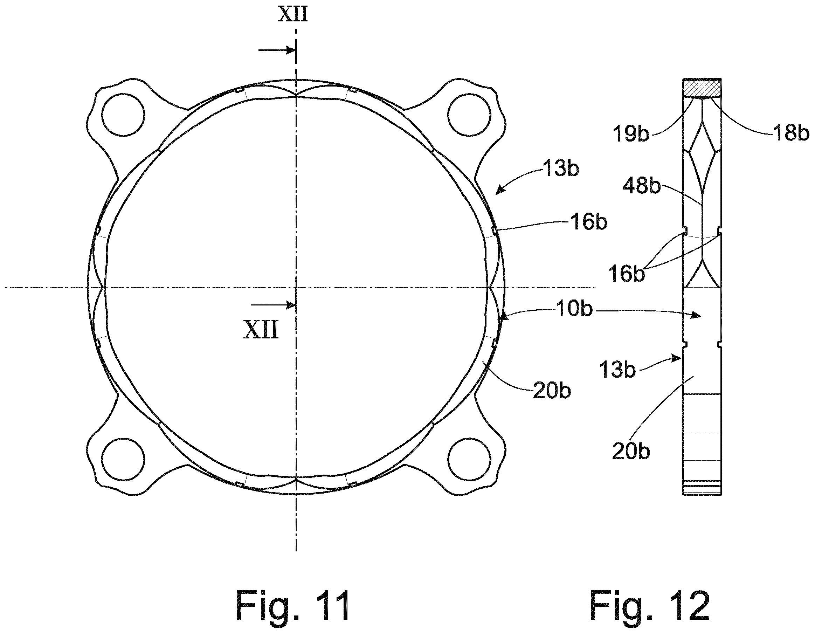

Die Fig. 9 bis 12 zeigen eine weitere Ausführung des Schmierungssystems 13b, bei welchem die Anschlaganordnung 10b zur Bildung eines Schmiermittelsammlers 20b genutzt ist. Die Anschlaganordnung 10b weist an ihrer den Tilgermassen 8 zugewandten Radialseite eine Deckwandung 12b auf, deren von den Tilgermassen 8 abgewandte Radialseite in Umfangsrichtung zumindest bereichsweise eine Ausbildung aufweist, bei welcher im Wesentlichen in axialer Mitte die größte nach innen weisende Radialerstreckung 48b vorgesehen ist, um von dort aus in axialer Richtung zu dem jeweiligen Tilgermassenträgerelement 4b', 4b" eine Reduzierung der Erstreckung nach radial innen zu erfahren. Mithin ist die vorgenannte Radialseite der Anschlaganordnung 10b also nach radial innen gepfeilt, wobei die Radialerstreckung 48b die Pfeilspitze bildet.

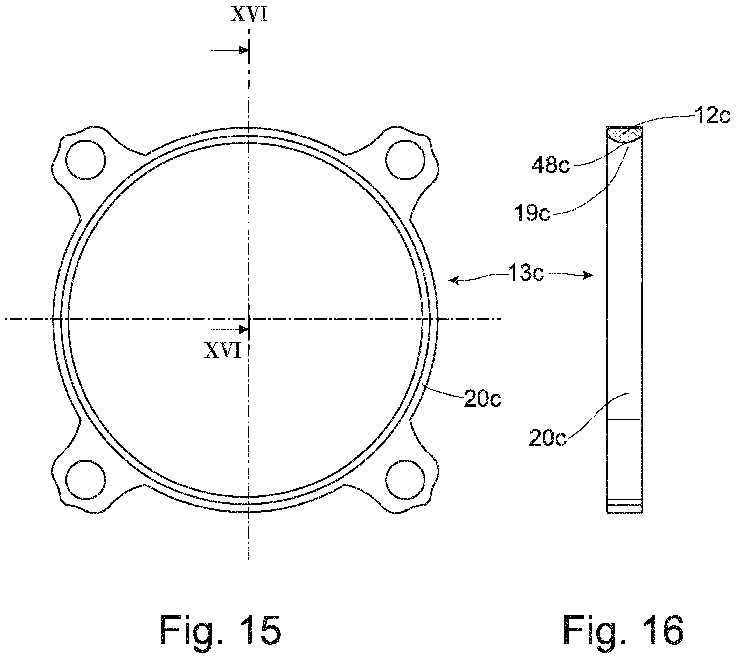

Bei dieser Ausführung wirkt das jeweilige Tilgermassenträgerelement 4', 4" jeweils im Sinne der Radialwandungen 15' und 15" in Fig. 1 bis 4 oder 15a` und 15a"in Fig. 5 bis 8, so dass die Tilgermassenträgerelemente 4', 4" zusammen mit der Deckwandung 12b einen Schmiermittelsammelraum 18b des Schmiermittelsammlers 20b bilden, dessen von den Tilgermassen abgewandte Radialseite eine Öffnung 19b zugeordnet ist.

Von einer in Fig. 9 lediglich schematisch dargestellten Schmiermittelzuführung 23 angeliefertes Schmiermittel gelangt nach Passage des Raumes 26 radial zwischen der Schmiermittelzuführung 23 und dem Schmiermittelsammler 20b und nach Eintritt in die dem Schmiermittelsammler 20b zugeordnete Öffnung 19b in den Schmiermittelsammelraum 18b des Schmiermittelsammlers 20b. Aufgrund der Pfeilung der von den Tilgermassen 8 abgewandten Radialseite der Deckwandung 12b der Anschlaganordnung 10b strömt das an der Deckwandung 12b aufgetroffene Schmiermittel in Achsrichtung jeweils in derjenigen Richtung weiter, in welcher sich die Erstreckungsweite der Deckwandung 12b in radialer Richtung nach innen reduziert, so dass sich das Schmiermittel im Schmiermittelsammelraum 18b in denjenigen Bereichen ansammelt, in welchen die Tilgermassenträgerelemente 4' und 4" jeweils an die Deckwandung 12b angrenzen. Das über die Schmiermitteldurchgänge 16b austretende Schmiermittel wird unter der Wirkung einer Fliehkraft, wie bereits anhand der Fig. 1 und 2 beschrieben, über Schmiermitteldurchgänge 21b axial zwischen den Tilgermassenträgerelementen 4' und 4" und der jeweils zugeordneten Tilgermasse 8 nach radial außen zu ausgewählten schmierintensiven Baueinheiten 35 gefördert, so dass der Schmiermittelnebel folglich diesen Baueinheiten 35 an jeweils exakt den benötigten Stellen zugeführt werden kann. Die Schmiermitteldurchgänge 16b bilden die Schmiermitteleingänge 30b der Schmiermittelzuleitung 33 eines Schmiermittelverteilers 32, während die Schmiermitteldurchgänge 21b als Schmiermittelausgänge 34 der Schmiermittelzuleitung 33 des Schmiermittelverteilers 32 dienen.

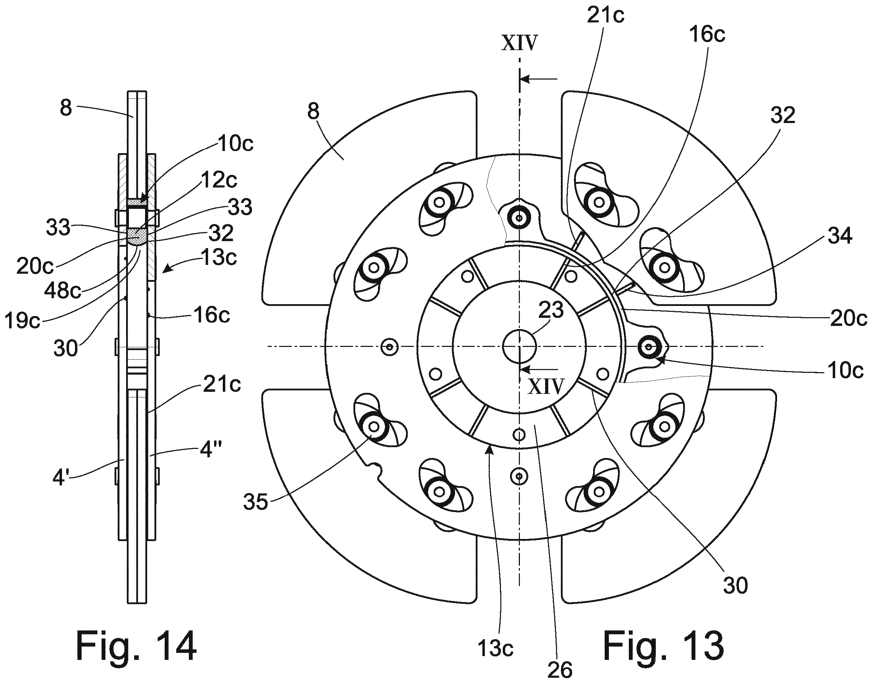

Auch bei der Ausführung der Fig. 13 bis 18 des Schmierungssystems 13c ist an der den Tilgermassen 8 zugewandten Radialseite eine Deckwandung 12c vorgesehen. Das Schmierungssystem 13c unterscheidet sich von dem Schmierungssystem 13b gemäß der Ausführung der Fig. 9 bis12 dadurch, dass die Deckwandung 12c der Anschlaganordnung 10c an ihrer von den Tilgermassen 8 abgewandten Radialseite in Umfangsrichtung zumindest bereichsweise eine Ausbildung aufweist, welche anstelle einer Pfeilung nach radial innen im Wesentlichen konvex ausgebildet ist, und zwar wiederum mit der größten Radialerstreckung 48c im Wesentlichen im axialen Mittenbereich, um von dort aus in axialer Richtung zu dem jeweiligen Tilgermassenträgerelement 4', 4" eine Reduzierung der Erstreckung nach radial innen zu erfahren.

Auch bei dieser Ausführung wirkt das jeweilige Tilgermassenträgerelement 4', 4" jeweils im Sinne der Radialwandungen 15' und 15" in Fig. 1 bis 4 oder 15a' und 15a"in Fig. 5 bis 8, so dass die Tilgermassenträgerelemente 4', 4" zusammen mit der Deckwandung 12c einen Schmiermittelsammelraum 18c des Schmiermittelsammlers 20c bilden, dessen von den Tilgermassen abgewandte Radialseite eine Öffnung 19c zugeordnet ist.

Von einer in Fig. 13 lediglich schematisch dargestellten Schmiermittelzuführung 23 angeliefertes Schmiermittel gelangt nach Passage des Raumes 26 radial zwischen der Schmiermittelzuführung 23 und dem Schmiermittelsammler 20c und nach Eintritt in die dem Schmiermittelsammler 20c zugeordnete Öffnung 19c in den Schmiermittelsammelraum 18c des Schmiermittelsammlers 20c. Aufgrund der Wölbung der von den Tilgermassen 8 abgewandten Radialseite der Deckwandung 12c der Anschlaganordnung 10c strömt das an der Deckwandung 12b aufgetroffene Schmiermittel in Achsrichtung jeweils in derjenigen Richtung weiter, in welcher sich die Erstreckungsweite der Deckwandung 12c in radialer Richtung nach innen reduziert, so dass sich das Schmiermittel im Schmiermittelsammelraum 18c in denjenigen Bereichen ansammelt, in welchen die Tilgermassenträgerelemente 4c' und 4c" jeweils an die Deckwandung 12b angrenzen. Dieses Schmiermittel fließt über die Schmiermitteldurchgänge 16c ab, wobei diese Schmiermitteldurchgänge 16c, abweichend von den bislang beschriebenen Ausführungen, nicht im Schmiermittelsammler 20c vorgesehen sind, sondern in den Tilgermassenträgerelementen 4' und 4", und zwar in deren dem Schmiermittelsammler 20c jeweils zugewandten Wandseiten.

Das über die Schmiermitteldurchgänge 16c geleitete Schmiermittel wird unter der Wirkung einer Fliehkraft über Schmiermitteldurchgänge 21c axial zwischen den Tilgermassenträgerelementen 4' und 4" und der jeweils zugeordneten Tilgermasse 8 nach radial außen zu ausgewählten schmierintensiven Baueinheiten 35 gefördert, so dass der Schmiermittelnebel folglich diesen Baueinheiten 35 an jeweils exakt den benötigten Stellen zugeführt werden kann. Die Schmiermitteldurchgänge 16c bilden die Schmiermitteleingänge 30 der Schmiermittelzuleitung 33 eines Schmiermittelverteilers 32, während die Schmiermitteldurchgänge 21c als Schmiermittelausgänge 34 der Schmiermittelzuleitung 33 des Schmiermittelverteilers 32 dienen.

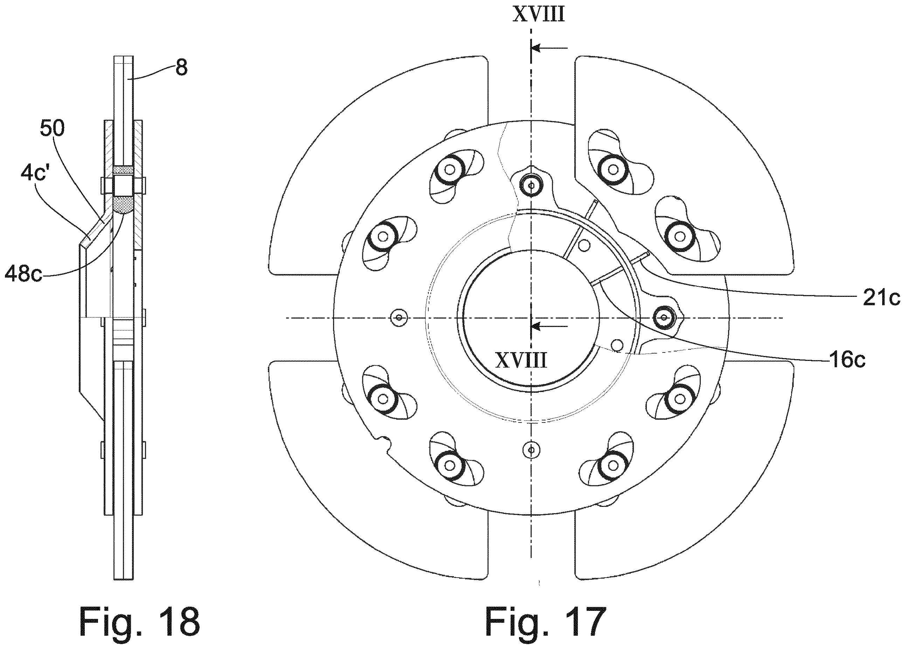

Die Fig. 17 und 18 schließlich zeigen diese Ausführung mit einem Tilgermassenträgerelement 4c', das eine von der zumindest einen Tilgermasse 8 fortweisende Materialumformung 50 aufweist, wobei diese Materialumformung 50 mittels eines Tiefziehvorganges hergestellt sein kann. Durch diese Maßnahme kann die Benetzungsoberfläche des Tilgermassenträgerelementes 4c' für Schmiermittel beträchtlich vergrößert werden.

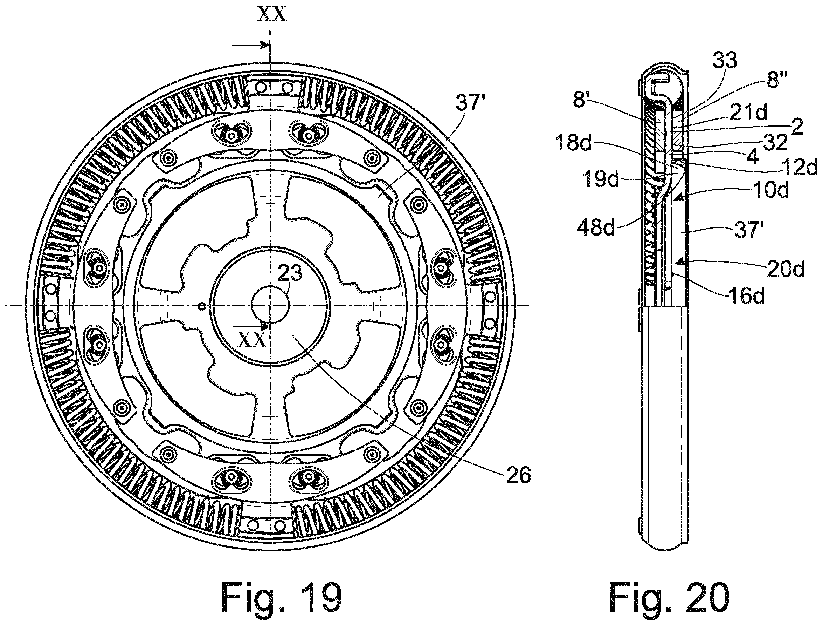

Bei der Ausführung des Schmierungssystems 13 gemäß Fig. 19 bis 22 weist der Tilgermassenträger 2 lediglich ein einzelnes Tilgermassenträgerelement 4 auf, das axial beiderseits jeweils Tilgermassen 8' oder 8" aufnimmt. Wie Fig. 20 zeigt, ist an einer Seite des Tilgermassenträgerelementes 4 radial innerhalb der Tilgermassen 8" eine Schmiermittelsammlerkomponente 37' eines Schmiermittelsammlers 20d vorgesehen, die einer Anschlaganordnung 10d zugeordnet ist, und eine radial äußere Deckwandung 12d aufweist. Die Deckwandung 12d weist an ihrer von den Tilgermassen 8" abgewandten Radialseite in Umfangsrichtung zumindest bereichsweise eine Ausbildung auf, welche nach radial innen im Wesentlichen konkav ausgebildet ist, und zwar mit der größten Radialerstreckung 48d nach radial innen an der Stelle der größten axialen Distanz zum Tilgermassenträgerelement 4, um in Richtung des Tilgermassenträgerelementes 4 eine Reduzierung der Erstreckung nach radial innen zu erfahren. Da das Tilgermassenträgerelement 4 im Sinne einer ersten Radialwandung wirksam ist, und die Radialerstreckung 48d im Sinne einer zweiten Radialwandung, bilden Tilgermassenträgerelement 4, Deckwandung 12d und Radialerstreckung 48d gemeinsam einen Schmiermittelsammelraum 18d des Schmiermittelsammlers 20d, dessen von den Tilgermassen 8" abgewandte Radialseite eine Öffnung 19d zugeordnet ist.

Von einer in Fig. 19 lediglich schematisch dargestellten Schmiermittelzuführung 23 angeliefertes Schmiermittel gelangt nach Passage des Raumes 26 radial zwischen der Schmiermittelzuführung 23 und der Schmiermittelsammlerkomponente 37' des Schmiermittelsammlers 20d und nach Eintritt in die der Schmiermittelsammlerkomponente 37' zugeordnete Öffnung 19d in einen Schmiermittelsammelraum 18d der Schmiermittelsammlerkomponente 37' des Schmiermittelsammlers 20d, wobei in diesem Schmiermittelsammelraum 18d das Schmiermittel angesammelt wird. Aufgrund der Wölbung der von den Tilgermassen 8" abgewandten Radialseite der Deckwandung 12d der Anschlaganordnung 10d strömt das an der Deckwandung 12d aufgetroffene Schmiermittel in Achsrichtung jeweils in derjenigen Richtung weiter, in welcher sich die Erstreckungsweite der Deckwandung 12d in radialer Richtung nach innen reduziert, so dass sich das Schmiermittel im Schmiermittelsammelraum 18d in demjenigen Bereich ansammelt, in welchen das Tilgermassenträgerelement 4 an die Deckwandung 12d angrenzt. Dieses Schmiermittel fließt über die Schmiermitteldurchgänge 16d ab, und wird unter der Wirkung einer Fliehkraft mittels axial zwischen Tilgermassenträgerelement 4 und Tilgermasse 8" vorgesehenen Schmiermitteldurchgängen 21d einer Schmiermittelzuleitung 33 eines Schmiermittelverteilers 32 nach radial außen zu ausgewählten schmierintensiven Baueinheiten 35 geleitet, so dass der Schmiermittelnebel folglich diesen Baueinheiten 35 an jeweils exakt den benötigten Stellen zugeführt werden kann. Die Schmiermitteldurchgänge 16d bilden die Schmiermitteleingänge 30 der Schmiermittelzuleitung 33, und die Schmiermitteldurchgänge 21d die Schmiermittelausgänge 34.

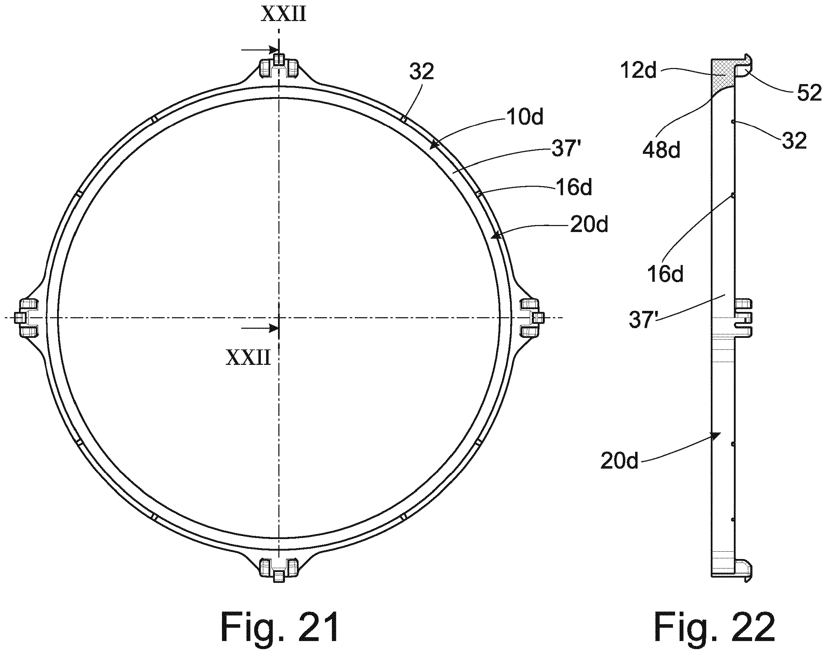

In Fig. 20 ist das Schmiermittelsystem 13 lediglich mit einer Schmiermittelsammlerkomponente 37' gezeigt, die an der Seite der Tilgermassen 8" des Tilgermassenträgerelementes 4 vorgesehen ist, wobei die Schmiermittelsammlerkomponente 37' mittels einer Rastverbindung 52 (Fig. 22) in einer entsprechend geformten Ausnehmung im Tilgermassenträgerelement 4 einrastet. Selbstverständlich kann anstelle dieser Anordnung die Schmiermittelsammlerkomponente auch an der Gegenseite des Tilgermassenträgerelementes 4 vorgesehen sein, oder aber der Schmiermittelsammler 20d ist beidseits des Tilgermassenträgerelementes 4 mit jeweils einer Schmiermittelsammlerkomponente ausgebildet.

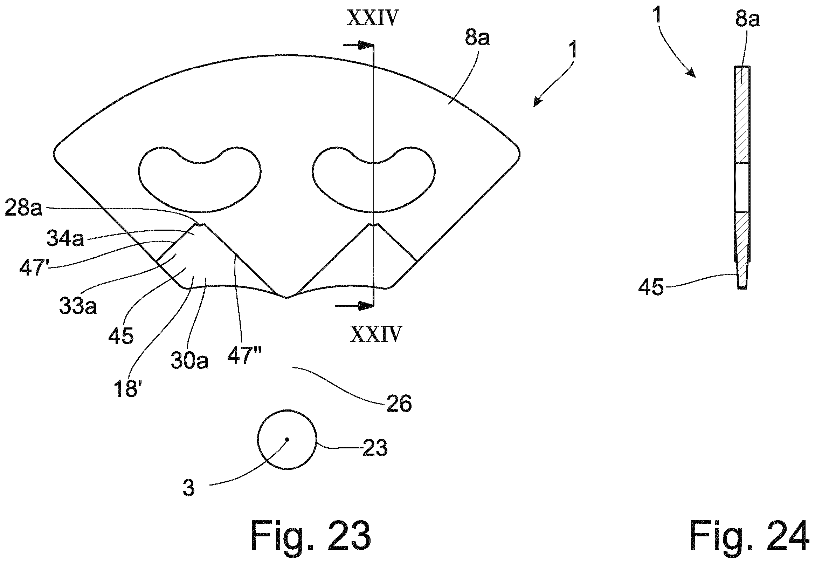

In Fig. 23 und 24 ist der Schmiermittelsammler und der Schmiermittelverteiler zu einer Schmiermittelbaueinheit 45 zusammengefasst, die im radial inneren Bereich der jeweiligen Tilgermasse 8a vorgesehen ist. Die jeweilige Schmiermittelbaueinheit 45 ist in Umfangsrichtung im radial inneren Bereich um ein Mehrfaches breiter ausgebildet als im radial äußeren Bereich, der in einer Mündung 28a endet. Die jeweilige Schmiermittelbaueinheit 45 verjüngt sich also nach radial außen, indem der vorgenannte radial innere Bereich über Führungsschrägen 47', 47" mit dem vorgenannten äußeren Bereich verbunden ist. Schmiermittel, das durch eine schematisch dargestellte Schmiermittelzuführung 23 angeliefert worden ist, tritt nach Passage des Raumes 26 radial zwischen der Schmiermittelzuführung 23 und der Schmiermittelbaueinheit 45 in die letztgenannte ein, um sich an den Führungsschrägen 47' und 47" anzusammeln, und um mit Unterstützung durch die Fliehkraft nach radial außen gefördert zu werden, bis es durch die Mündung 28a die Schmiermittelbaueinheit 45 verlässt, und zu der jeweils ausgewählten schmierbedarfsintensiven Baueinheit 35 gelangt. Der breitere radial innere Bereich der Baueinheit 45 dient hierbei als Schmiermitteleingang 30a einer Schmiermittelzuleitung 33a, der schmälere radial äußere Bereich der Schmiermittelbaueinheit 45 dagegen als Schmiermittelausgang 34a der Schmiermittelzuleitung 33a.

Wie Fig. 24 zeigt, verjüngt sich die Schmiermittelbaueinheit 45 auch im Querschnitt von radial innen nach radial außen. Die Schmiermittelbaueinheit 45 dient insgesamt auch als Schmiermittelsammelraum 18', der durch Axialreduzierung der Tilgermasse 8a hauptsächlich in dem als Schmiermitteleingang 30a der Schmiermittelzuleitung 33a wirksamen radial inneren Bereich der Schmiermittelbaueinheit 45 gebildet ist.

### Bezugszeichen

- 1: Tilgersystem
- 2: Tilgermassenträger
- 3: Zentralachse
- 4: Tilgermassenträgerelement
- 5: Führungsbahn Tilgermassenträgerelement
- 6: Koppeleinrichtung
- 7: Führungsbahn Tilgermasse
- 8: Tilgermasse
- 10: Anschlaganordnung
- 11: Abstandshalter
- 12: Deckwandung
- 13: Öse
- 14: Schmierungssystem
- 15: Radialwandung
- 16: Schmiermitteldurchgang Schmiermittelsammler
- 17: Radialwandungssegment
- 18: Schmiermittelsammelraum
- 19: Öffnung
- 20: Schmiermittelsammler
- 21: Schmiermitteldurchgang Tilgermassenträgerelement
- 22: Radialaussparung
- 23: Schmiermittelzuführung
- 24: ringförmiges Bauteil
- 25: Zentralbohrung
- 26: Raum
- 28: Mündung
- 30: Schmiermitteleingang
- 32: Schmiermittelverteiler
- 33: Schmiermittelzuleitung
- 34: Schmiermittelausgang
- 35: bedarfsintensive Baueinheit
- 37: Schmiermittelsammlerkomponente
- 38: Schmiermittelwanne
- 40: erster Axialbereich der Schmiermittelwanne
- 41: zweiter Axialbereich der Schmiermittelwanne
- 42: Aussparung Tilgermassenträgerelement
- 45: Schmiermittelbaueinheit
- 47: Führungsschrägen
- 48: Radialerstreckung
- 50: Materialumformung

## Patentansprüche

1. Tilgersystem (1), aufweisend wenigstens einen Tilgermassenträger (2) und zumindest eine relativ zum Tilgermassenträger (2) bewegbar an diesem aufgenommene Tilgermasse (8; 8"), wobei dem Tilgermassenträger (2) jeweils mit Radialversatz zueinander eine Schmiermittelzuführung (23), einen Schmiermittelsammler (20; 20a; 20b; 20c; 20d) sowie einen Schmiermittelverteiler (32) zugeordnet sind, von denen die Schmiermittelzuführung (23) in geringerem Radialabstand als der Schmiermittelsammler (20; 20a; 20b; 20c; 20d) zu einer Zentralachse (3) und der Schmiermittelverteiler (32) in größerem Radialabstand als der Schmiermittelsammler (20; 20a; 20b; 20c; 20d) zu einer Zentralachse (3) angeordnet sind, um mit Unterstützung durch die Fliehkraft mittels der Schmiermittelzuführung (23) zugeführtes Schmiermittel über den Schmiermittelsammler (20; 20a; 20b; 20c; 20d) anzusammeln und durch den Schmiermittelverteiler (32) wenigstens zu der zumindest einen Tilgermasse (8; 8") zu leiten, wobei zumindest für den Schmiermittelsammler (20; 20a; 20b; 20c; 20d) eine Zuordnung zu einer Anschlaganordnung (10; 10a; 10b; 10c; 10d) besteht, die zur Begrenzung des Auslenkweges der Tilgermasse (8; 8") gegenüber dem Tilgermassenträger (2) dient, und dass der Schmiermittelverteiler (32) über zumindest eine vom Schmiermittelsammler (20; 20a; 20b; 20c; 20d) zu wenigstens einer ausgewählten schmierbedarfsintensiven Baueinheit (35) führende Schmiermittelzuleitung (33) verfügt, welche angrenzend an den Erstreckungsbereich dieser ausgewählten schmierbedarfsintensiven Baueinheit (35) mündet, **dadurch gekennzeichnet, dass** die Anschlaganordnung (10; 10b; 10c; 10d) den Schmiermittelsammler (20; 20b; 20c; 20d) beinhaltet.

2. Tilgersystem (1) nach Anspruch 1, **dadurch gekennzeichnet, dass** die zumindest eine Schmiermittelzuleitung (33) des Schmiermittelverteilers (32) über wenigstens einen Schmiermitteleingang (30) verfügt, der zumindest im Wesentlichen radial außerhalb des Schmiermittelsammlers (20) vorgesehen ist, und dass die zumindest eine Schmiermittelzuleitung (33) des Schmiermittelverteilers (32) über wenigstens einen Schmiermittelausgang (34) verfügt, der zumindest im Wesentlichen radial außerhalb des Schmiermitteleinganges (30), aber zumindest im Wesentlichen radial innerhalb wenigstens einer ausgewählten schmierbedarfsintensiven Baueinheit (35) vorgesehen ist.

3. Tilgersystem (1) nach Anspruch 1, **dadurch gekennzeichnet, dass** der Schmiermittelsammler (20; 20a; 20b; 20c; 20d) die Zentralachse (3) zumindest im Wesentlichen ringförmig umschließt und über wenigstens einen Schmiermittelsammelraum (18; 18a; 18b; 18c; 18d) verfügt, welcher an der von der zumindest einen Tilgermasse (8) abgewandten Radialseite des Schmiermittelsammlers (20; 20a; 20b; 20c; 20d) zumindest eine den Zugang von Schmiermittel zu dem Schmiermittelsammelraum (18; 18a; 18b; 18c; 18d) ermöglichende Öffnung (19; 19a; 19b; 19c; 19d) aufweist, und dass der wenigstens eine Schmiermittelsammelraum (18; 18a; 18b; 18c; 18d) mit zumindest einem Schmiermitteldurchgang (16; 16a; 16b; 16c; 16d) versehen ist, welcher eine Abströmung von innerhalb des Schmiermittelsammelraumes (18; 18a; 18b; 18c; 18d) angesammelten Schmiermittels in den Schmiermitteleingang (30) der Schmiermittelzuleitung (33) des Schmiermittelverteilers (32) ermöglicht.

4. Tilgersystem (1) nach Anspruch 3, **dadurch gekennzeichnet, dass** der Schmiermittelsammler (20; 20a; 20b; 20c; 20d) zur Bildung des Schmiermittelsammelraumes (18; 18a; 18b; 18c; 18d) an seiner der zumindest einen Tilgermasse (8; 8") zugewandten Radialseite über eine Deckwandung (12; 12a; 12b; 12c; 12d) verfügt, welcher an zumindest einer Axialseite eine zumindest im Wesentlichen nach radial innen verlaufende Radialwandung (15'; 15"; 15a', 15a") oder ein Tilgermassenträgerelement (4', 4"; 4) zugeordnet ist.

5. Tilgersystem (1) nach Anspruch 4, **dadurch gekennzeichnet, dass** die Deckwandung (12; 12a; 12b; 12c; 12d) und/oder die wenigstens eine Radialwandung (15'; 15"; 15a', 15a") und/oder das Tilgermassenträgerelement (4', 4"; 4) mit zumindest einem Schmiermitteldurchgang (16; 16a; 16b; 16c; 16d) versehen ist.

6. Tilgersystem (1) nach Anspruch 5, **dadurch gekennzeichnet, dass** die wenigstens eine Deckwandung (12; 12a) und/oder die wenigstens eine Radialwandung (15'; 15"; 15a', 15a") des Schmiermittelsammlers (20; 20a) in Umfangsrichtung zumindest eine als Schmiermitteldurchgang (16; 16a) dienende Umfangsunterbrechung aufweist.

7. Tilgersystem (1) nach einem der Ansprüche 1 bis 4 mit einem Tilgermassenträger (2), der axial beidseits der zumindest einen Tilgermasse (8; 8") über jeweils ein Tilgermassenträgerelement (4', 4") verfügt, **dadurch gekennzeichnet, dass** der Schmiermittelsammler (20b; 20c; 20d) an seiner der zumindest einen Tilgermasse (8; 8") zugewandten Radialseite eine Deckwandung (12b; 12c; 12d) aufweist, welche an ihrer radialen Innenseite in Umfangsrichtung mit zumindest einem Bereich versehen ist, welcher innerhalb seines axialen Erstreckungsbereichs über einen Bereich größter Radialerstreckung (48b, 48c; 48d) nach radial innen verfügt, um von dort aus in axialer Richtung zu dem jeweils benachbarten Tilgermassenträgerelement (4', 4"; 4) eine Reduzierung der Erstreckung nach radial innen zu erfahren.

8. Tilgersystem (1) nach Anspruch 7, **dadurch gekennzeichnet, dass** die wenigstens eine Deckwandung (12b; 12d) des Schmiermittelsammlers (20b; 20d) in Umfangsrichtung zumindest eine als Schmiermitteldurchgang (16b; 16d) dienende und damit den Schmiermitteleingang (30) der Schmiermittelzuleitung (33) des Schmiermittelverteilers (32) bildende Axialreduzierung aufweist.

9. Tilgersystem (1) nach Anspruch 7, **dadurch gekennzeichnet, dass** die Deckwandung (12b) des Schmiermittelsammlers (20b) an ihrer radialen Innenseite in Achsrichtung zumindest im Wesentlichen gepfeilt ausgebildet ist, wobei der im Wesentlichen axiale Mittenbereich die größte Radialerstreckung (48b) nach radial innen aufweist, um von der Stelle der größten Radialerstreckung (48c) aus in axialer Richtung zu dem jeweiligen Tilgermassenträgerelement (4', 4") eine Reduzierung der Erstreckung nach radial innen zu erfahren.

10. Tilgersystem (1) nach Anspruch 7, **dadurch gekennzeichnet, dass** die Deckwandung (12c) des Schmiermittelsammlers (20c) an ihrer radialen Innenseite in Achsrichtung zumindest im Wesentlichen konvex ausgebildet ist, wobei der im Wesentlichen axiale Mittenbereich die größte Radialerstreckung (48c) nach radial innen aufweist, um von der Stelle der größten Radialerstreckung (48c) aus in axialer Richtung zu dem jeweiligen Tilgermassenträgerelement (4', 4") eine Reduzierung der Erstreckung nach radial innen zu erfahren.

11. Tilgersystem (1) nach Anspruch 7, **dadurch gekennzeichnet, dass** die Deckwandung (12d) des Schmiermittelsammlers (20d) an ihrer radialen Innenseite in Achsrichtung zumindest im Wesentlichen konkav ausgebildet ist, wobei im Wesentlichen der vom benachbarten Tilgermassenträgerelement (4) am entfernteste Axialbereich die größte Radialerstreckung (48d) nach radial innen aufweist, um von der Stelle der größten Radialerstreckung (48d) aus in axialer Richtung zu dem Tilgermassenträgerelement (4) eine Reduzierung der Erstreckung nach radial innen zu erfahren.

12. Tilgersystem (1) nach Anspruch 11, **dadurch gekennzeichnet, dass** der Tilgermassenträger (2) axial beidseits jeweils zumindest eine Tilgermasse (8', 8") aufnimmt, und der Schmiermittelsammler (20d) in Zuordnung zu zumindest einer der Tilgermassen (8', 8") über wenigstens eine Schmiermittelsammlerkomponente (37') verfügt.

13. Tilgersystem (1) nach Anspruch 12, **dadurch gekennzeichnet, dass** die Schmiermittelsammlerkomponente (37') und/oder der Tilgermassenträger (2) an der dem jeweils anderen dieser beiden Baueinheiten - also Schmiermittelsammlerkomponente (37') oder Tilgermassenträger (2) - zugewandten Seite mit wenigstens einer als Schmiermitteldurchgang (16d) dienenden und damit den Schmiermitteleingang (30) der Schmiermittelzuleitung (33) des Schmiermittelverteilers (32) bildenden Axialreduzierung versehen ist.

14. Tilgersystem (1) nach Anspruch 7, **dadurch gekennzeichnet, dass** das jeweilige Tilgermassenträgerelement (4') an seiner der zumindest einen Tilgermasse (8) zugewandten Seite wenigstens eine als Schmiermitteldurchgang (16c) dienende und damit den Schmiermittelausgang (30) und/oder eine als Schmiermitteldurchgang (21c) dienende und damit den Schmiermittelausgang (34) der Schmiermittelzuleitung (33) des Schmiermittelverteilers (32) bildende Axialreduzierung aufweist.

15. Tilgersystem (1) nach Anspruch 7, **dadurch gekennzeichnet, dass** zumindest ein Tilgermassenträgerelement (4') im radial inneren Bereich eine von der zumindest einen Tilgermasse (8) fortweisende Materialumformung (50) aufweist.

16. Tilgersystem (1), aufweisend wenigstens eine Tilgermasse (8a), der eine Schmiermittelzuführung (23), ein Schmiermittelsammler sowie ein Schmiermittelverteiler zugeordnet sind, von denen die Schmiermittelzuführung (23) in geringerem Radialabstand als der Schmiermittelsammler oder der Schmiermittelverteiler zu einer Zentralachse (3) vorgesehen ist, um mit Unterstützung durch die Fliehkraft mittels der Schmiermittelzuführung (23) zugeführtes Schmiermittel über den Schmiermittelsammler anzusammeln und durch den Schmiermittelverteiler wenigstens zu der zumindest einen Tilgermasse (8a) zu leiten, wobei der Schmiermittelsammler und der Schmiermittelverteiler zu einer Schmiermittelbaueinheit (45) zusammengefasst sind, bei welcher zumindest eine zu wenigstens einer ausgewählten schmierbedarfsintensiven Baueinheit (35) führende Schmiermittelzuleitung (33a) angrenzend an den Erstreckungsbereich der wenigstens einen ausgewählten schmierbedarfsintensiven Baueinheit (35) mündet, **dadurch gekennzeichnet, dass** die Schmiermittelbaueinheit (45) an der zumindest einen Tilgermasse (8a) realisiert ist, indem die zumindest eine Tilgermasse (8a) radial innerhalb wenigstens einer ausgewählten schmierbedarfsintensiven Baueinheit (35) über wenigstens einen Schmiermittelsammelraum (18') verfügt, dessen radial innerer Bereich als Schmiermitteleingang (30a) der Schmiermittelzuleitung (33a) und dessen radial äußerer Bereich als Schmiermittelausgang (34a) der Schmiermittelzuleitung (33a) wirksam ist, wobei der Schmiermittelausgang (34a) auf eine Mündung (28a) verengt ist, die auf die wenigstens eine ausgewählte schmierbedarfsintensive Baueinheit (35) ausgerichtet ist.

17. Tilgersystem (1) nach Anspruch 16, **dadurch gekennzeichnet, dass** der als Schmiermitteleingang (30a) der Schmiermittelzuleitung (33a) wirksame radial innere Bereich des Schmiermittelsammelraumes (18') den als Schmiermittelausgang (34a) der Schmiermittelzuleitung (33a) wirksamen radial äußeren Bereich des Schmiermittelsammelraumes (18') bezüglich seiner Breite in Umfangsrichtung um ein Mehrfaches übertrifft.

18. Tilgersystem (1) nach Anspruch 16 oder 17, **dadurch gekennzeichnet, dass** der Schmiermittelsammelraum (18) durch Axialreduzierung der Tilgermasse (8a) zumindest in dem als Schmiermitteleingang (30a) der Schmiermittelzuleitung (33a) wirksamen radial inneren Bereich der Schmiermittelbaueinheit (45) gebildet ist.

## Claims

1. Absorber system (1) having at least one absorber-mass carrier (2) and having at least one absorber mass (8; 8") which is accommodated, so as to be movable relative to the absorber-mass carrier (2), on the latter, wherein the absorber-mass carrier (2) has associated therewith, in each case with a radial offset from one another, a lubricant feed (23), a lubricant collector (20; 20a; 20b; 20c; 20d) and a lubricant distributor (32), of which the lubricant feed (23) is arranged at a smaller radial distance from a central axis (3) than the lubricant collector (20; 20a; 20b; 20c; 20d) and the lubricant distributor (32) is arranged at a greater radial distance from a central axis (3) than the lubricant collector (20; 20a; 20b; 20c; 20d) in order for lubricant fed by means of the lubricant feed (23) to be, assisted by centrifugal force, collected via the lubricant collector (20; 20a; 20b; 20c; 20d) and conducted through the lubricant distributor (32) at least to the at least one absorber mass (8; 8"), wherein, at least for the lubricant collector (20; 20a; 20b; 20c; 20d), there is an association with a stop arrangement (10; 10a; 10b; 10c; 10d) which serves for limiting the deflection path of the absorber mass (8; 8") in relation to the absorber-mass carrier (2), wherein the lubricant distributor (32) has at least one lubricant supply line (33) which leads from the lubricant collector (20; 20a; 20b; 20c; 20d) to at least one selected lubrication-demand-intensive structural unit (35) and which opens out adjacent to the region of extent of this selected lubrication-demand-intensive structural unit (35), **characterized in that** the stop arrangement (10; 10b; 10c; 10d) contains the lubricant collector (20; 20b; 20c; 20d) .

2. Absorber system (1) according to Claim 1, **characterized in that** the at least one lubricant supply line (33) of the lubricant distributor (32) has at least one lubricant inlet (30) which is provided at least substantially radially outside the lubricant collector (20), and **in that** the at least one lubricant supply line (33) of the lubricant distributor (32) has at least one lubricant outlet (34) which is provided at least substantially radially outside the lubricant inlet (30) but at least substantially radially within at least one selected lubrication-demand-intensive structural unit (35) .

3. Absorber system (1) according to Claim 1, **characterized in that** the lubricant collector (20; 20a; 20b; 20c; 20d) at least substantially annularly surrounds the central axis (3) and has at least one lubricant-collecting space (18; 18a; 18b; 18c; 18d) which, on that radial side of the lubricant collector (20; 20a; 20b; 20c; 20d) which faces away from the at least one absorber mass (8), has at least one opening (19; 19a; 19b; 19c; 19d) which allows the access of lubricant to the lubricant-collecting space (18; 18a; 18b; 18c; 18d), and **in that** the at least one lubricant-collecting space (18; 18a; 18b; 18c; 18d) is provided with at least one lubricant passage (16; 16a; 16b; 16c; 16d) which allows an outflow of lubricant collected within the lubricant-collecting space (18; 18a; 18b; 18c; 18d) into the lubricant inlet (30) of the lubricant supply line (33) of the lubricant distributor (32).

4. Absorber system (1) according to Claim 3, **characterized in that**, for forming the lubricant-collecting space (18; 18a; 18b; 18c; 18d), on its radial side which faces towards the at least one absorber mass (8; 8"), the lubricant collector (20; 20a; 20b; 20c; 20d) has a top wall (12; 12a; 12b; 12c; 12d) which, on at least one axial side, has associated therewith an at least substantially radially inwardly extending radial wall (15'; 15"; 15a', 15a") or an absorber-mass-carrier element (4', 4"; 4) .

5. Absorber system (1) according to Claim 4, **characterized in that** the top wall (12; 12a; 12b; 12c; 12d) and/or the at least one radial wall (15'; 15"; 15a', 15a") and/or the absorber-mass-carrier element (4', 4"; 4) are/is provided with at least one lubricant passage (16; 16a; 16b; 16c; 16d).

6. Absorber system (1) according to Claim 5, **characterized in that** the at least one top wall (12; 12a) and/or the at least one radial wall (15'; 15"; 15a', 15a") of the lubricant collector (20; 20a) have/has in a circumferential direction at least one circumferential interruption which serves as a lubricant passage (16; 16a) .

7. Absorber system (1) according to one of Claims 1 to 4 with an absorber-mass carrier (2) which, axially on both sides of the at least one absorber mass (8; 8"), has in each case one absorber-mass-carrier element (4', 4"), **characterized in that**, on its radial side which faces towards the at least one absorber mass (8; 8"), the lubricant collector (20b; 20c; 20d) has a top wall (12b; 12c; 12d) which, on its radial inner side, is provided in a circumferential direction with at least one region which, within its axial region of extent, has a region of greatest radial extent (48b; 48c; 48d) radially inwards, in order to undergo, from there, a reduction in extent radially inwards in an axial direction to the in each case adjacent absorber-mass-carrier element (4', 4"; 4) .

8. Absorber system (1) according to Claim 7, **characterized in that** the at least one top wall (12b; 12d) of the lubricant collector (20b; 20d) has in a circumferential direction at least one axial reduction which serves as a lubricant passage (16b; 16d) and which thus forms the lubricant inlet (30) of the lubricant supply line (33) of the lubricant distributor (32).

9. Absorber system (1) according to Claim 7, **characterized in that**, on its radial inner side, the top wall (12b) of the lubricant collector (20b) has the form at least substantially of an arrow in an axial direction, wherein the substantially axial central region has the greatest radial extent (48b) radially inwards, in order to undergo, from the point of greatest radial extent (48b), a reduction in extent radially inwards in an axial direction to the respective absorber-mass-carrier element (4', 4") .

10. Absorber system (1) according to Claim 7, **characterized in that**, on its radial inner side, the top wall (12c) of the lubricant collector (20c) is of at least substantially convex form in an axial direction, wherein the substantially axial central region has the greatest radial extent (48c) radially inwards, in order to undergo, from the point of greatest radial extent (48c), a reduction in extent radially inwards in an axial direction to the respective absorber-mass-carrier element (4', 4").

11. Absorber system (1) according to Claim 7, **characterized in that**, on its radial inner side, the top wall (12d) of the lubricant collector (20d) is of at least substantially concave form in an axial direction, wherein substantially the axial region furthest away from the adjacent absorber-mass-carrier element (4) has the greatest radial extent (48d) radially inwards, in order to undergo, from the point of greatest radial extent (48d), a reduction in extent radially inwards in an axial direction to the absorber-mass-carrier element (4).

12. Absorber system (1) according to Claim 11, **characterized in that** the absorber-mass carrier (2) axially accommodates on both sides in each case at least one absorber mass (8', 8"), and the lubricant collector (20d) has, in association with at least one of the absorber masses (8', 8"), at least one lubricant-collector component (37').

13. Absorber system (1) according to Claim 12, **characterized in that** the lubricant-collector component (37') and/or the absorber-mass carrier (2), on the side facing towards the in each case other one of these two structural units - that is to say lubricant-collector component (37') or absorber-mass carrier (2) - are/is provided with at least one axial reduction which serves as a lubricant passage (16d) and which thus forms the lubricant inlet (30) of the lubricant supply line (33) of the lubricant distributor (32).

14. Absorber system (1) according to Claim 7, **characterized in that** the respective absorber-mass-carrier element (4') has on its side which faces towards the at least one absorber mass (8) at least one axial reduction which serves as a lubricant passage (16c) and thus forms the lubricant inlet (30), and/or which serves as a lubricant passage (21c) and thus forms the lubricant outlet (34), of the lubricant supply line (33) of the lubricant distributor (32).

15. Absorber system (1) according to Claim 7, **characterized in that** at least one absorber-mass-carrier element (4') has in the radial inner region a material deformation (50) which is directed away from the at least one absorber mass (8).

16. Absorber system (1) having at least one absorber mass (8a) which has associated therewith a lubricant feed (23), a lubricant collector and a lubricant distributor, of which the lubricant feed (23) is provided at a smaller radial distance from a central axis (3) than the lubricant collector or the lubricant distributor in order for lubricant fed by means of the lubricant feed (23) to be, assisted by centrifugal force, collected via the lubricant collector and conducted through the lubricant distributor at least to the at least one absorber mass (8a), wherein the lubricant collector and the lubricant distributor are combined into a lubricant structural unit (45) in which at least one lubricant supply line (33a) leading to at least one selected lubrication-demand-intensive structural unit (35) opens out adjacent to the region of extent of the at least one selected lubrication-demand-intensive structural unit (35), **characterized in that** the lubricant structural unit (45) is realized at the at least one absorber mass (8a) **in that**, radially within at least one selected lubrication-demand-intensive structural unit (35), the at least one absorber mass (8a) has at least one lubricant-collecting space (18') whose radially inner region acts as a lubricant inlet (30a) of the lubricant supply line (33a) and whose radially outer region acts as a lubricant outlet (34a) of the lubricant supply line (33a), wherein the lubricant outlet (34a) is narrowed to a mouth (28a) which is directed towards the at least one selected lubrication-demand-intensive structural unit (35).

17. Absorber system (1) according to Claim 16, **characterized in that**, in terms of its width in a circumferential direction, the radially inner region of the lubricant-collecting space (18') that acts as a lubricant inlet (30a) of the lubricant supply line (33a) exceeds the radially outer region of the lubricant-collecting space (18') that acts as a lubricant outlet (34a) of the lubricant supply line (33a) by a number of times.

18. Absorber system (1) according to Claim 16 or 17, **characterized in that** the lubricant-collecting space (18') is formed by axial reduction of the absorber mass (8a) at least in the radially inner region of the lubricant structural unit (45) that acts as a lubricant inlet (30a) of the lubricant supply line (33a).

## Revendications

1. Système d'amortissement (1), présentant au moins un support de masse d'amortissement (2) et au moins une masse d'amortissement (8 ; 8'') reçue sur celui-ci de manière déplaçable par rapport au support de masse d'amortissement (2), une amenée de lubrifiant (23), un collecteur de lubrifiant (20 ; 20a ; 20b ; 20c ; 20d) ainsi qu'un distributeur de lubrifiant (32) étant associés au support de masse d'amortissement (2) respectivement avec décalage radial les uns par rapport aux autres, parmi lesquels l'amenée de lubrifiant (23) est disposée à une plus petite distance radiale d'un axe central (3) que le collecteur de lubrifiant (20 ; 20a ; 20b ; 20c ; 20d) et le distributeur de lubrifiant (32) est disposé à une plus grande distance radiale d'un axe central (3) que le collecteur de lubrifiant (20 ; 20a ; 20b ; 20c ; 20d), afin de collecter le lubrifiant amené au moyen de l'amenée de lubrifiant (23) par le biais du collecteur de lubrifiant (20 ; 20a ; 20b ; 20c ; 20d) de manière assistée par la force centrifuge et de le guider au moyen du distributeur de lubrifiant (32) au moins jusqu'à l'au moins une masse d'amortissement (8 ; 8"), une association à un ensemble de butée (10 ; 10a ; 10b ; 10c ; 10d) existant au moins pour le collecteur de lubrifiant (20 ; 20a ; 20b ; 20c ; 20d), laquelle association sert à la limitation de la course de déviation de la masse d'amortissement (8 ; 8'') par rapport au support de masse d'amortissement (2), et le distributeur de lubrifiant (32) possédant au moins une conduite d'alimentation en lubrifiant (33) menant du collecteur de lubrifiant (20 ; 20a ; 20b ; 20c ; 20d) à au moins une unité structurale (35) sélectionnée nécessitant une lubrification intensive, laquelle conduite d'alimentation en lubrifiant débouche de manière adjacente à la zone d'étendue de cette unité structurale (35) sélectionnée nécessitant une lubrification intensive, **caractérisé en ce que** l'ensemble de butée (10 ; 10b ; 10c ; 10d) contient le collecteur de lubrifiant (20 ; 20b ; 20c ; 20d).

2. Système d'amortissement (1) selon la revendication 1, **caractérisé en ce que** l'au moins une conduite d'alimentation en lubrifiant (33) du distributeur de lubrifiant (32) possède au moins une entrée de lubrifiant (30) qui est prévue au moins sensiblement radialement à l'extérieur du collecteur de lubrifiant (20), et **en ce que** l'au moins une conduite d'alimentation en lubrifiant (33) du distributeur de lubrifiant (32) possède au moins une sortie de lubrifiant (34) qui est prévue au moins sensiblement radialement à l'extérieur de l'entrée de lubrifiant (30), mais au moins sensiblement radialement à l'intérieur d'au moins une unité structurale (35) sélectionnée nécessitant une lubrification intensive.

3. Système d'amortissement (1) selon la revendication 1, **caractérisé en ce que** le collecteur de lubrifiant (20 ; 20a ; 20b ; 20c ; 20d) entoure l'axe central (3) au moins sensiblement de manière annulaire et possède au moins un espace de collecte de lubrifiant (18 ; 18a ; 18b ; 18c ; 18d), lequel possède, au niveau du côté radial du collecteur de lubrifiant (20 ; 20a ; 20b ; 20c ; 20d) opposé à l'au moins une masse d'amortissement (8), au moins une ouverture (19 ; 19a ; 19b ; 19c ; 19d) permettant l'accès du lubrifiant à l'espace de collecte de lubrifiant (18 ; 18a ; 18b ; 18c ; 18d), et **en ce que** l'au moins un espace de collecte de lubrifiant (18 ; 18a ; 18b ; 18c ; 18d) est doté d'au moins un passage de lubrifiant (16 ; 16a ; 16b ; 16c ; 16d), lequel permet une évacuation du lubrifiant collecté à l'intérieur de l'espace de collecte de lubrifiant (18 ; 18a ; 18b ; 18c ; 18d) dans l'entrée de lubrifiant (30) de la conduite d'alimentation en lubrifiant (33) du distributeur de lubrifiant (32).

4. Système d'amortissement (1) selon la revendication 3, **caractérisé en ce que** le collecteur de lubrifiant (20 ; 20a ; 20b ; 20c ; 20d) possède une paroi de recouvrement (12 ; 12a ; 12b ; 12c ; 12d) au niveau de son côté radial tourné vers l'au moins une masse d'amortissement (8 ; 8") pour la formation de l'espace de collecte de lubrifiant (18 ; 18a ; 18b ; 18c ; 18d), paroi de recouvrement à laquelle est associé(e) une paroi radiale (15' ; 15'' ; 15a', 15a'') s'étendant au moins sensiblement radialement vers l'intérieur ou un élément de support de masse d'amortissement (4', 4" ; 4) au niveau d'au moins un côté axial.

5. Système d'amortissement (1) selon la revendication 4, **caractérisé en ce que** la paroi de recouvrement (12 ; 12a ; 12b ; 12c ; 12d) et/ou l'au moins une paroi radiale (15' ; 15'' ; 15a', 15a'') et/ou l'élément de support de masse d'amortissement (4', 4" ; 4) sont dotés d'au moins un passage de lubrifiant (16 ; 16a ; 16b ; 16c ; 16d).

6. Système d'amortissement (1) selon la revendication 5, **caractérisé en ce que** l'au moins une paroi de recouvrement (12 ; 12a) et/ou l'au moins une paroi radiale (15' ; 15'' ; 15a', 15a'') du collecteur de lubrifiant (20 ; 20a) présentent au moins une interruption périphérique servant de passage de lubrifiant (16 ; 16a) dans la direction périphérique.

7. Système d'amortissement (1) selon l'une des revendications 1 à 4 comportant un support de masse d'amortissement (2) qui possède respectivement un élément de support de masse d'amortissement (4', 4'') axialement des deux côtés de l'au moins une masse d'amortissement (8 ; 8"), **caractérisé en ce que** le collecteur de lubrifiant (20b ; 20c ; 20d) présente, au niveau de son côté radial tourné vers l'au moins une masse d'amortissement (8 ; 8"), une paroi de recouvrement (12b ; 12c ; 12d), laquelle est dotée, au niveau de son côté intérieur radial dans la direction périphérique, d'au moins une zone, laquelle possède à l'intérieur de sa zone d'étendue axiale une zone de plus grande étendue radiale (48b, 48c ; 48d) radialement vers l'intérieur, afin de subir à partir de là une réduction de l'étendue radialement vers l'intérieur dans la direction axiale par rapport à l'élément de support de masse d'amortissement (4', 4" ; 4) respectivement adjacent.

8. Système d'amortissement (1) selon la revendication 7, **caractérisé en ce que** l'au moins une paroi de recouvrement (12b ; 12d) du collecteur de lubrifiant (20b ; 20d) présente dans la direction périphérique au moins une réduction axiale servant de passage de lubrifiant (16b ; 16d) et formant ainsi l'entrée de lubrifiant (30) de la conduite d'alimentation en lubrifiant (33) du distributeur de lubrifiant (32).

9. Système d'amortissement (1) selon la revendication 7, **caractérisé en ce que** la paroi de recouvrement (12b) du collecteur de lubrifiant (20b) est réalisée au moins sensiblement en forme de flèche au niveau de son côté intérieur radial dans la direction axiale, la zone centrale sensiblement axiale présentant la plus grande étendue radiale (48b) radialement vers l'intérieur, afin de subir à partir de l'emplacement de la plus grande étendue radiale (48b) une réduction de l'étendue radialement vers l'intérieur dans la direction axiale par rapport à l'élément de support de masse d'amortissement (4', 4'') respectif.

10. Système d'amortissement (1) selon la revendication 7, **caractérisé en ce que** la paroi de recouvrement (12c) du collecteur de lubrifiant (20c) est réalisée au moins sensiblement de manière convexe au niveau de son côté intérieur radial dans la direction axiale, la zone centrale sensiblement axiale présentant la plus grande étendue radiale (48c) radialement vers l'intérieur, afin de subir à partir de l'emplacement de la plus grande étendue radiale (48c) une réduction de l'étendue radialement vers l'intérieur dans la direction axiale par rapport à l'élément de support de masse d'amortissement (4', 4'') respectif.

11. Système d'amortissement (1) selon la revendication 7, **caractérisé en ce que** la paroi de recouvrement (12d) du collecteur de lubrifiant (20d) est réalisée au moins sensiblement de manière concave au niveau de son côté intérieur radial dans la direction axiale, la zone axiale sensiblement la plus éloignée de l'élément de support de masse d'amortissement (4) adjacent présentant la plus grande étendue radiale (48d) radialement vers l'intérieur, afin de subir à partir de l'emplacement de la plus grande étendue radiale (48d) une réduction de l'étendue radialement vers l'intérieur dans la direction axiale par rapport à l'élément de support de masse d'amortissement (4).

12. Système d'amortissement (1) selon la revendication 11, **caractérisé en ce que** le support de masse d'amortissement (2) reçoit respectivement au moins une masse d'amortissement (8', 8'') axialement des deux côtés, et le collecteur de lubrifiant (20d) possède au moins un composant de collecteur de lubrifiant (37') en association avec au moins l'une des masses d'amortissement (8', 8").

13. Système d'amortissement (1) selon la revendication 12, **caractérisé en ce que** le composant de collecteur de lubrifiant (37') et/ou le support de masse d'amortissement (2) sont dotés d'au moins une réduction axiale servant de passage de lubrifiant (16d) et formant ainsi l'entrée de lubrifiant (30) de la conduite d'alimentation en lubrifiant (33) du distributeur de lubrifiant (32) sur le côté tourné vers l'autre unité structurale respective de ces deux unités structurales, c'est-à-dire le composant de collecteur de lubrifiant (37') ou le support de masse d'amortissement (2).

14. Système d'amortissement (1) selon la revendication 7, **caractérisé en ce que** l'élément de support de masse d'amortissement (4') respectif présente au moins une réduction axiale servant de passage de lubrifiant (16c) et formant ainsi l'entrée de lubrifiant (30) et/ou une réduction axiale servant de passage de lubrifiant (21c) et formant ainsi la sortie de lubrifiant (34) de la conduite d'alimentation en lubrifiant (33) du distributeur de lubrifiant (32) sur son côté tourné vers l'au moins une masse d'amortissement (8).

15. Système d'amortissement (1) selon la revendication 7, **caractérisé en ce qu'**au moins un élément de support de masse d'amortissement (4') présente dans la zone radialement intérieure une déformation de matière (50) orientée à l'opposé de l'au moins une masse d'amortissement (8).

16. Système d'amortissement (1), présentant au moins une masse d'amortissement (8a), à laquelle sont associés une amenée de lubrifiant (23), un collecteur de lubrifiant ainsi qu'un distributeur de lubrifiant, parmi lesquels l'amenée de lubrifiant (23) est prévue à une plus petite distance radiale d'un axe central (3) que le collecteur de lubrifiant ou le distributeur de lubrifiant, afin de collecter le lubrifiant amené au moyen de l'amenée de lubrifiant (23) par le biais du collecteur de lubrifiant de manière assistée par la force centrifuge et de le guider au moyen du distributeur de lubrifiant au moins jusqu'à l'au moins une masse d'amortissement (8a), le collecteur de lubrifiant et le distributeur de lubrifiant étant réunis en une unité structurale de lubrifiant (45), dans laquelle au moins une conduite d'alimentation en lubrifiant (33a) menant à au moins une unité structurale (35) sélectionnée nécessitant une lubrification intensive débouche de manière adjacente à la zone d'étendue de l'au moins une unité structurale (35) sélectionnée nécessitant une lubrification intensive, **caractérisé en ce que** l'unité structurale de lubrifiant (45) est réalisée au niveau de l'au moins une masse d'amortissement (8a), par le fait que l'au moins une masse d'amortissement (8a) possède au moins un espace de collecte de lubrifiant (18') radialement à l'intérieur d'au moins une unité structurale (35) sélectionnée nécessitant une lubrification intensive, espace de collecte de lubrifiant dont la zone radialement intérieure agit en tant qu'entrée de lubrifiant (30a) de la conduite d'alimentation en lubrifiant (33a) et dont la zone radialement extérieure agit en tant que sortie de lubrifiant (34a) de la conduite d'alimentation en lubrifiant (33a), la sortie de lubrifiant (34a) étant rétrécie en une embouchure (28a) qui est orientée vers l'au moins une unité structurale (35) sélectionnée nécessitant une lubrification intensive.

17. Système d'amortissement (1) selon la revendication 16, **caractérisé en ce que** la zone radialement intérieure de l'espace de collecte de lubrifiant (18') agissant en tant qu'entrée de lubrifiant (30a) de la conduite d'alimentation en lubrifiant (33a) est plusieurs fois supérieure à la zone radialement extérieure de l'espace de collecte de lubrifiant (18') agissant en tant que sortie de lubrifiant (34a) de la conduite d'alimentation en lubrifiant (33a) par rapport à sa largeur dans la direction périphérique.

18. Système d'amortissement (1) selon la revendication 16 ou 17, **caractérisé en ce que** l'espace de collecte de lubrifiant (18') est formé par réduction axiale de la masse d'amortissement (8a) au moins dans la zone radialement intérieure de l'unité structurale de lubrifiant (45) agissant en tant qu'entrée de lubrifiant (30a) de la conduite d'alimentation en lubrifiant (33a).
